(19) Europäisches Patentamt / European Patent Office / Office européen des brevets

(11) **EP 4 366 424 B1**

(12) **EUROPEAN PATENT SPECIFICATION**

(45) Date of publication and mention
of the grant of the patent:
**14.01.2026 Bulletin 2026/03**

(21) Application number: **22853574.6**

(22) Date of filing: **08.08.2022**

(51) International Patent Classification (IPC):
**H04W 68/02** *(2009.01)*     **H04W 68/00** *(2009.01)*
**H04W 52/02** *(2009.01)*

(52) Cooperative Patent Classification (CPC):
**H04W 68/005; H04L 1/1854; H04L 1/189;**
**H04L 5/00; H04L 5/0053; H04W 68/02;**
**H04W 68/025; H04W 76/20;** H04W 52/0229;
H04W 64/00; H04W 76/27

(86) International application number:
**PCT/KR2022/011743**

(87) International publication number:
**WO 2023/014199 (09.02.2023 Gazette 2023/06)**

(54) **METHOD AND DEVICE FOR TRANSMITTING AND RECEIVING WIRELESS SIGNAL IN WIRELESS COMMUNICATION SYSTEM**

VERFAHREN UND VORRICHTUNG ZUM SENDEN UND EMPFANGEN EINES DRAHTLOSSIGNALS IN EINEM DRAHTLOSKOMMUNIKATIONSSYSTEM

PROCÉDÉ ET DISPOSITIF DE TRANSMISSION ET DE RÉCEPTION D'UN SIGNAL SANS FIL DANS UN SYSTÈME DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.08.2021   KR 20210103812
13.10.2021   KR 20210136058
04.11.2021   KR 20210150591**

(43) Date of publication of application:
**08.05.2024 Bulletin 2024/19**

(73) Proprietor: **LG Electronics Inc.
Yeongdeungpo-gu
Seoul 07336 (KR)**

(72) Inventors:
• **HWANG, Seunggye
Seoul 06772 (KR)**
• **KIM, Jaehyung
Seoul 06772 (KR)**
• **YANG, Suckchel
Seoul 06772 (KR)**
• **KIM, Seonwook
Seoul 06772 (KR)**

(74) Representative: **Plasseraud IP
104 Rue de Richelieu
CS92104
75080 Paris Cedex 02 (FR)**

(56) References cited:
**US-A1- 2020 396 687**

• **OPPO: "Further discussion on Paging enhancements for power saving", vol. RAN WG1, no. e-Meeting; 20210510 - 20210527, 12 May 2021 (2021-05-12), XP052011028, Retrieved from the Internet <URL:https://ftp.3gpp.org/tsg_ran/WG1_RL1/TSGR1_105-e/Docs/R1-2104787.zip R1-2104787 Further discussion on Paging enhancements for power saving.doc> [retrieved on 20210518]**

**(Cont. next page)**

- OPPO: "Further discussion on Paging enhancements for power saving", 3GPP DRAFT; R1-2104787, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210510 - 20210527, 12 May 2021 (2021-05-12), Mobile Competence Centre ; 650, route des Lucioles ; F-06921 Sophia-Antipolis Cedex ; France , XP052011028
- VIVO: "Paging enhancements for idle/inactive mode UE power saving", 3GPP DRAFT; R1-2106011, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210510 - 20210527, 25 May 2021 (2021-05-25), Mobile Competence Centre ; 650, route des Lucioles ; F-06921 Sophia-Antipolis Cedex ; France , XP052013810
- APPLE INC.: "Paging early indication for idle/ inactive-mode UE", 3GPP DRAFT; R1-2105116, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210510 - 20210527, 12 May 2021 (2021-05-12), Mobile Competence Centre ; 650, route des Lucioles ; F-06921 Sophia-Antipolis Cedex ; France , XP052011204
- NORDIC SEMICONDUCTOR ASA: "On paging early indication", 3GPP DRAFT; R1-2105886, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210510 - 20210527, 11 May 2021 (2021-05-11), Mobile Competence Centre ; 650, route des Lucioles ; F-06921 Sophia-Antipolis Cedex ; France , XP052006480

## Description

### TECHNICAL FIELD

The present disclosure relates to a wireless communication system, and more particularly, to a method and apparatus for transmitting and receiving a wireless signal.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

The invention is set out in the appended set of claims.

### ADVANTAGEOUS EFFECTS

According to an embodiment of the present disclosure, the size of reserved bits of a downlink control information (DCI) format for a paging early indication (PEI) is configurable, thereby not only providing forward compatibility for future user equipments (UEs) having added new functions but also offering benefits in power saving in that even if a UE does not support the new functions, there is no increase in the overhead of blind detection of the DCI.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary physical downlink control channel (PDCCH) transmission and reception process.
FIG. 6 illustrates an exemplary physical downlink shared channel (PDSCH) reception and acknowledgement/negative acknowledgement (ACK/NACK) transmission process.
FIG. 7 illustrates an exemplary physical uplink shared channel (PUSCH) transmission process.
FIG. 8 illustrates a long term evolution (LTE)-based wake-up signal.
FIGS. 9 and 10 respectively illustrate flowcharts of base station (BS) operations and user equipment (UE) operations to which methods proposed in the present disclosure are applicable.
FIG. 11 is a diagram for explaining a downlink control information (DCI) format for a paging early indication (PEI) according to an embodiment of the present disclosure.

FIG. 12 is a diagram for explaining a method by which a UE receives a signal according to an embodiment of the present disclosure.

FIG. 13 is a diagram for explaining a method by which a BS transmits a signal according to an embodiment of the present disclosure.

FIGS. 14 to 17 illustrate an example of a communication system 1 and wireless devices applicable to the present disclosure.

FIG. 18 illustrates an exemplary discontinuous reception (DRX) operation applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

3GPP LTE

- TS 36.211: Physical channels and modulation
- TS 36.212: Multiplexing and channel coding
- TS 36.213: Physical layer procedures
- TS 36.300: Overall description
- TS 36.321: Medium Access Control (MAC)
- TS 36.331: Radio Resource Control (RRC)

3GPP NR

- TS 38.211: Physical channels and modulation
- TS 38.212: Multiplexing and channel coding
- TS 38.213: Physical layer procedures for control
- TS 38.214: Physical layer procedures for data
- TS 38.300: NR and NG-RAN Overall Description
- TS 38.321: Medium Access Control (MAC)
- TS 38.331: Radio Resource Control (RRC) protocol specification

- TS 37.213: Introduction of channel access procedures to unlicensed spectrum for NR-based access

Terms and Abbreviations

- PSS: Primary Synchronization Signal
- SSS: Secondary Synchronization Signal
- CRS: Cell reference signal
- CSI-RS: Channel State Information Reference Signal
- TRS: Tracking Reference Signal
- SS: Search Space
- CSS: Common Search Space
- USS: UE-specific Search Space
- PDCCH: Physical Downlink Control Channel; The PDCCH is used to represent PDCCHs of various structures which may be used for the same purpose in the following description.
- PO: Paging Occasion
- MO: Monitoring Occasion
- RMSI: Remaining Minimum SI
- BD: Blind Decoding
- DCI: Downlink Control Information
- WUS: Wake Up Signal; The WUS may be used to represent other method signals or channels (e.g., a paging early indication (PEI)), which perform a similar function.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

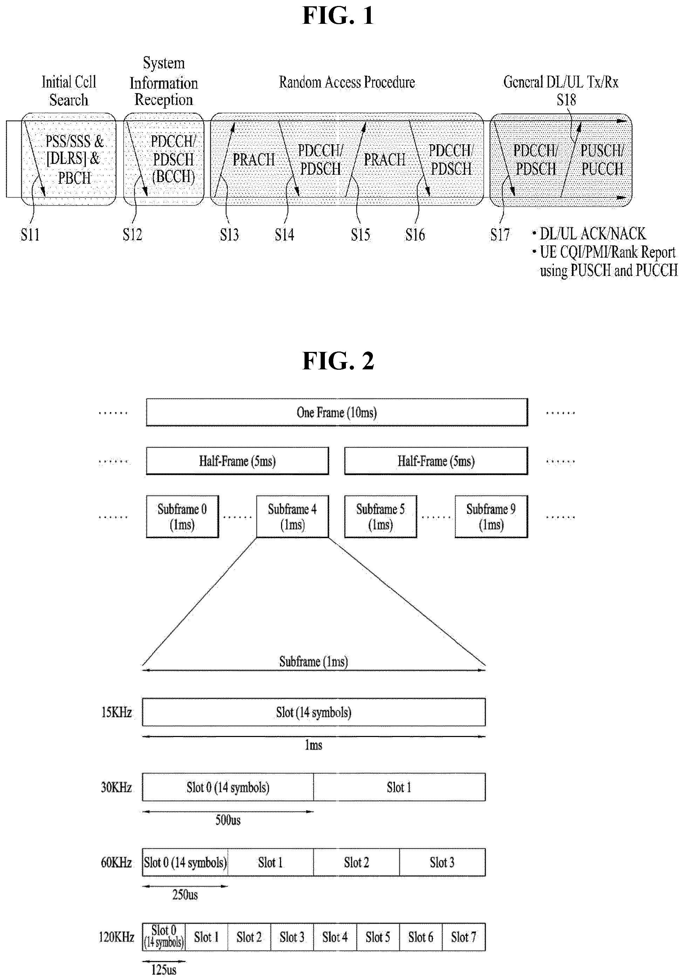

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S11. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S12.

The UE may perform a random access procedure to access the BS in steps S13 to S16. For random access, the UE may transmit a preamble to the BS on a physical random access channel (PRACH) (S13) and receive a response message for preamble on a PDCCH and a PDSCH corresponding to the PDCCH (S14). In the case of contention-based random access, the UE may perform a contention resolution procedure by further transmitting the PRACH (S15) and receiving a PDCCH and a PDSCH corresponding to the PDCCH (S16).

After the foregoing procedure, the UE may receive a PDCCH/PDSCH (S17) and transmit a physical uplink shared channel (PUSCH)/physical uplink control channel (PUCCH) (S18), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot<br>* $N^{frame,u}_{slot}$: Number of slots in a frame<br>* $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

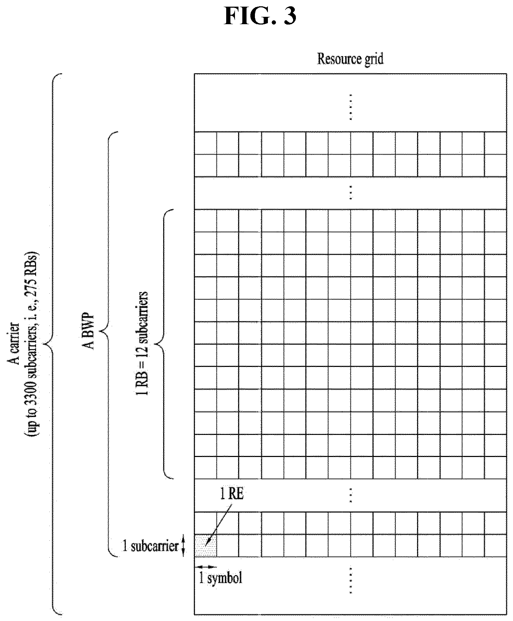

FIG. 3 illustrates a resource grid of a slot. A slot includes a plurality of symbols in the time domain. For example, when the normal CP is used, the slot includes **14** symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

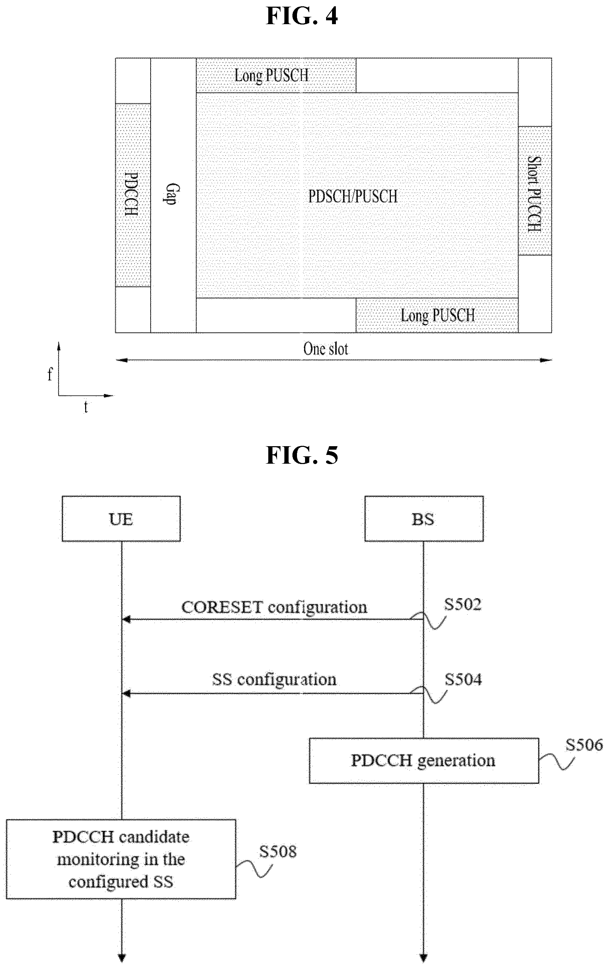

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/-fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS".

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.

- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

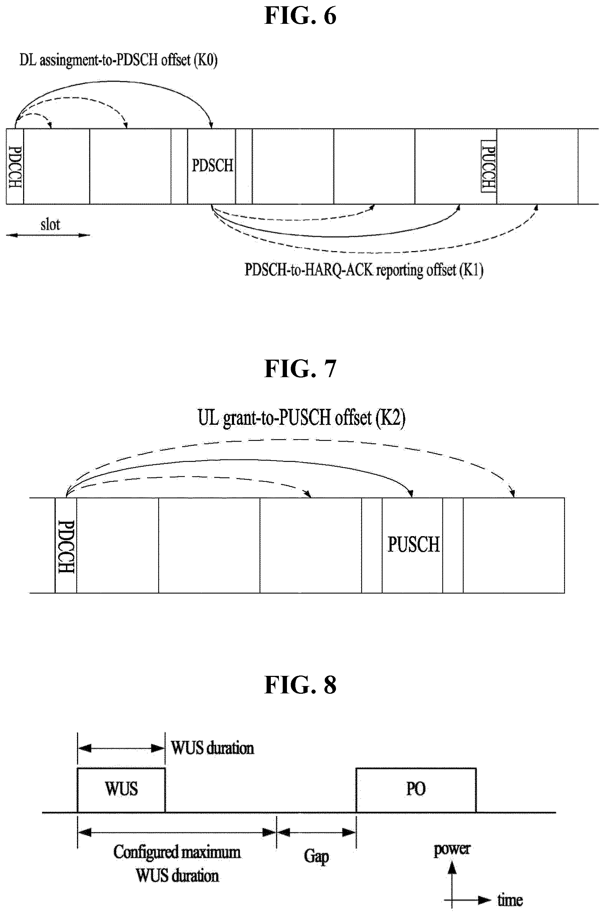

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. For example, DCI format 1_0 or DCI format 1_1 may include the following information.

- Frequency domain resource assignment: Indicates an RB set allocated to a PDSCH.
- Time domain resource assignment: Indicates K0 (e.g., slot offset), the starting position (e.g., OFDM symbol index) of the PDSCH in slot #n+K0, and the duration (e.g., the number of OFDM symbols) of the PDSCH.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 6 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## Pacing

The network may (i) access to UEs in RRC_IDLE, RRC_INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC_INACTIVE states and UEs in the RRC_CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC_INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC_INACTIVE state. A paging DRX cycle is configured by the network, as follows.

1) In the case of CN-initiated paging, a default cycle is broadcast in system information.
2) In the case of CN-initiated paging, a UE-specific cycle is configured by NAS signaling.
3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each PO signaled by system information, for an SI change indication and a PWS notification. In bandwidth adaptation (BA), the RRC_CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC_INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC_INACTIVE state, the UE transitions to the RRC_IDL state and notifies the NAS of the CN-initiated paging.

A PF and a PO for paging are determined in the following manner:

- An SFN for the PF is determined by:

$$(SFN + PF\_offset) \bmod T = (T \operatorname{div} N)*(UE\_ID \bmod N)$$

- An index i_s indicating the index of the PO is determined by:

$$i\_s = floor(UE\_ID/N) \bmod Ns$$

The following parameters may be used to calculate the PF and i_s above.

- T: The DRX cycle of the UE (T is determined by the smallest of UE-specific DRX values (if configured by RRC and/or an upper layer) and a default DRX value broadcast in system information. In the RRC_IDLE state, if UE-specific DRX is not configured by an upper layer, the default value is applied).
- N: Number of total paging frames in T
- Ns: Number of POs for a PF
- PF_offset: Offset used for PF determination
- UE_ID: 5G-S-TMSI mod 1024

**WUS (Wake-up signal)/PEI (Paging Early Indication)**

In LTE Rel-15 Narrowband Internet of Things (NB-IoT) and Machine Type Communication (MTC), a wake-up signal (WUS) was introduced to save power of a UE. The WUS is a signal indicating preliminarily whether there is an actual paging transmission in a paging SS at a specific position. When the BS wants to transmit paging in a PO at a specific position, the BS may transmit a WUS at WUS transmission position(s) associated with the PO. The UE monitors the WUS transmission positions associated with the PO at the specific position. Upon detection of the WUS at the WUS transmission position(s), the UE may expect that paging will be transmitted in the PO, whereas when failing to detect the WUS at the WUS transmission position(s), the UE may not expect paging in the PO. The gain of power saving may be achieved by this operation. In LTE Rel-16 NB-IoT and MTC, a UE-group WUS was introduced to increase the power saving gain of the Rel-15 WUS. The UE-group WUS may advantageously reduce an unnecessary wakeup probability of a UE by using a WUS transmission position and sequence determined based on the UE-group ID of the UE.

FIG. 8 is a diagram illustrating a WUS in an LTE system. Referring to FIG. 8, in MTC and NB-IoT, the WUS may be used to reduce power consumption related to paging monitoring. The WUS is a physical layer signal indicating whether a UE is supposed to monitor a paging signal (e.g., an MPDCCH/NPDCCH scrambled with a P-RNTI) according to a cell configuration. For a UE which is not configured with eDRX (i.e., configured only with DRX), the WUS may be associated with one PO (N=1). On the contrary, for a UE configured with eDRX, the WUS may be associated with one or more POs (N≥1). Upon detection of the WUS, the UE may monitor N POs after being associated with the WUS. When failing to detect the WUS, the UE may maintain sleep mode by skipping PO monitoring until the next WUS monitoring. The UE may receive WUS configuration information from the BS and monitor the WUS based on the WUS configuration information. The WUS configuration information may include, for example, a maximum WUS duration, the number of consecutive POs associated with the WUS, and gap information. The maximum WUS duration may refer to a maximum time period during which the WUS may be transmitted, and may be expressed as a ratio to a maximum repetition number (e.g., Rmax) related to a PDCCH (e.g., MPDCCH or NPDCCH). Although the UE may expect repeated WUS transmissions within the maximum WUS duration, the number of actual WUS transmissions may be less than a maximum number of WUS transmissions within the maximum WUS duration. For example, the number of WUS repetitions may be small for a UE in good coverage. A resource/occasion in which the WUS may be transmitted within the maximum WUS duration is referred to as a WUS resource. The WUS resource may be defined as a plurality of consecutive OFDM symbols by a plurality of consecutive subcarriers. The WUS resource may be defined as a plurality of consecutive OFDM symbols by a plurality of consecutive subcarriers in a subframe or slot. For example, the WUS resource may be defined as 14 consecutive OFDM symbols by 12 consecutive subcarriers. Upon detection of the WUS, the UE does not monitor the WUS until a first PO associated with the WUS. When the WUS is not detected during the maximum WUS duration, the UE does not monitor a paging signal in POs associated with the WUS (or the UE remains in the sleep mode).

In a communication system such as NR, it may be indicated by a paging early indication (PEI) (e.g., a PEI based on a sequence or DCI) whether the UE should monitor paging DCI in a PO or whether paging DCI is provided. When the UE succeeds in detecting the PEI, the UE monitors the paging DCI (and/or a PDSCH carrying a corresponding paging message). When failing in detecting the PEI, the UE may skip monitoring of the paging DCI in the PO.

## DCI design for reduced Blind Decoding complexity

In communication systems such as LTE and NR, paging is used for the purpose of triggering RRC setup, system information modification, and/or a PWS/ETWS notification. The UE monitors a PDCCH at the position of a PO configured by the BS and, when detecting DCI scrambled with a P-RNTI, performs an operation indicated by the DCI.

In LTE Rel-15 NB-IoT and MTC, the WUS was introduced to save power of a UE. The WUS is a signal indicating whether an actual paging transmission exists in a PO at a specific position. When the BS wants to transmit paging in the PO at the specific position, the BS may transmit the WUS at WUS transmission position(s) associated with the PO. The UE monitors the WUS transmission position(s) associated with the PO at the specific position. Upon detection of the WUS at the WUS transmission position(s), the UE may expect that paging will be transmitted in the PO. When the UE fails to detect the WUS at the WUS transmission position(s), the UE does not expect paging in the PO. This operation may bring the gain of power saving. In LTE Rel-16 NB-IoT and MTC, the UE-group WUS was introduced to increase the power saving gain of the Rel-15 WUS. The UE-group WUS is advantageous in that the unnecessary wake-up probability of a UE may be reduced by using a WUS transmission position and sequence determined based on the UE group ID of the UE.

In Rel-16 NR, a DCI-based power saving scheme has been introduced for the purpose of supporting power saving in a connected mode. To this end, a new DCI format, DCI format 2-6 has been introduced. Specifically, the BS indicates the position of bits to be monitored by the UE in DCI format 2-6, and the UE determines power saving operations in an active time duration based on information on the bits at the corresponding position.

As discussed in Rel-16 NB-IoT and MTC, when a UE in an idle/inactive mode monitors a PO, unnecessary wake-up may occur if paging for other UEs sharing the same PO is transmitted. The unnecessary wake-up may lead to increases in UE power consumption. In current NR, the DCI-based scheme for preventing the connected mode UE from performing unnecessary monitoring has been introduced to achieve the power saving effect as described above. However, the same (or similar) method has not been defined for the idle/inactive mode. In Rel-17 NR, the introduction of a PEI is being discussed as a means to provide information related to paging ahead of a PO for the purpose of UE power saving. As the information related to paging, the following are discussed: a wake-up indication for a UE group (i.e., an entire set of UE_IDs capable of expecting paging on a specific PO), a wake-up indication for a UE subgroup (i.e., a subgroup obtained by subdividing a specific UE group), a short message, and/or an indication on reception of a TRS/CSI-RS, which is assumed and expected by the idle/inactive mode UE.

DCI may be used for various types of information. In other words, the DCI may be suitable for PDCCH-based PEI transmission. In general, providing more paging-related information may be useful for controlling various power saving operations of the UE. However, considering the decoding reliability of a PDCCH, an increase in the amount of information may demand higher accuracy in time/frequency tracking before the UE performs PDCCH decoding. This may lead to an increase in the power consumption of the UE when monitoring an SSB. Therefore, regarding the introduction of a PDCCH-based PEI, it is important to appropriately determine the amount of PEI information in consideration of power saving efficiency. For example, to improve PDCCH decoding performance, a method of reducing the number of DCI bits, that is, a method of introducing a new DCI format, may be considered.

In designing the PDCCH-based PEI, an increase in UE complexity may be considered from another perspective. Existing NR UEs may expect to receive DCI formats 0_0 and 1_0 in the idle/inactive mode. The purposes and information of the corresponding DCI formats may be distinguished by various RNTI values used for CRC scrambling. In this case, even if search spaces for different purposes overlap with each other, the UE may perform BD without additional complexity (or with very low additional complexity) for DCI formats of the same size. However, if a new DCI format is introduced for the purpose of supporting the PDCCH-based PEI, and if the size of the corresponding DCI format is different from DCI format 0_0/1_0, the UE receiving the PEI may require additional complexity to perform BD for the new size of DCI. It should be noted that an increase in the number of times the UE performs BD may significantly increase the power consumption of the UE. Additionally, it should be considered that when the UE is in the connected mode, there are constraints in the number of times of BD and channel estimation for the maximum number of PDCCH candidates, which is allowed per slot. If new sizes of DCI formats are added, it may potentially limit monitoring of existing DCI formats and RNTIs.

The issues described above are not limited to the PDCCH-based PEI and may also occur in other general cases. In other words, the proposals of the present disclosure may be applied to situations where the BD/channel estimation overhead of the UE increases due to addition of a new function that provides information based on a PDCCH.

The present disclosure proposes methods for designing the PDCCH-based PEI and UE operation methods for monitoring the PDCCH-based PEI. The proposed methods may offer advantages in terms of improving the power saving efficiency while maintaining the decoding complexity of the UE.

The present disclosure will be described in the context of the NR system, but the present disclosure is not limited thereto. That is, the present disclosure is applicable to various wireless communication systems. The methods described below may be combined or implemented independently. Terms, symbols, sequences, etc. described herein may be replaced with other terms, symbols, sequences, etc.

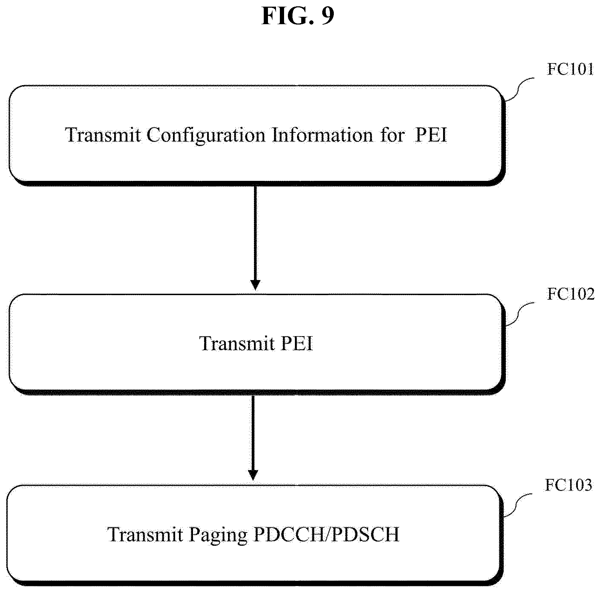

FIG. 9 illustrates BS operations to which the methods proposed in the present disclosure are applicable.

The BS may generate configuration information on a PEI and transmit the configuration information (FC101). The configuration information may include configuration information regarding the DCI format and monitoring location of the PEI. For example, the configuration information may be transmitted through higher layer signaling (e.g., SIB or RRC signaling).

If the BS desires to transmit information such as a paging message or short message to a specific UE, the BS may transmit the PEI at a location where the specific UE monitors the PEI, for example, at the location of a frame and slots based on the configuration information provided in step FC101 (FC102). If necessary, the BS may perform a DCI size alignment operation.

Thereafter, when the BS has information to transmit such as a paging message or short message, the BS may transmit a PDCCH/PDSCH at the location of a PO associated with the PEI transmitted in step FC102 (FC103).

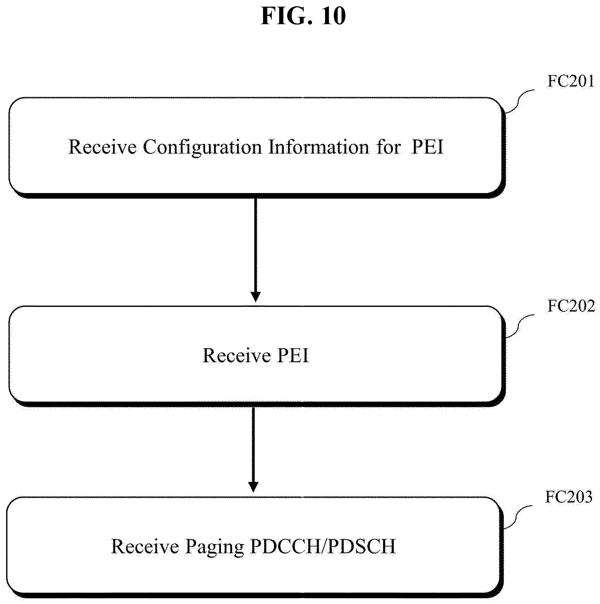

FIG. 10 illustrates UE operations to which the methods proposed in the present disclosure are applicable.

The UE may receive configuration information regarding a PEI and apply the configuration information (FC201). In this case, the configuration information may include configuration information regarding the DCI format and monitoring location of the PEI. For example, the UE may perform a procedure for obtaining a higher layer signal (e.g., SIB or RRC signaling) to receive the configuration information.

Subsequently, the UE may perform a PEI monitoring operation at a location where the PEI is expected to be received, for example, at the location of a frame and slots based on the configuration information received in step FC201 (FC202). The UE may determine a method of decoding the DCI format at the monitoring location based on the configuration information.

If the UE is instructed to monitor a PO through the PEI in step FC202, the UE may receive a PDCCH/PDSCH at the location of the PO associated with the received PEI (FC203).

## Proposal 1: DCI size alignment via frozen/padding bits

If the number of times that the UE performs blind detection (BD) increases while the UE monitors a PDCCH, the power consumption of the UE increases. To reduce the power consumption and complexity of the UE, NR limits the number of PDCCH candidates for which the UE is capable of performing BD at the same time. Due to such limitations on the number of PDCCH candidates for which the UE is capable of performing BD, methods of configuring different DCI formats with the same size are considered to minimize constraints on PDCCH transmission and reception.

In this specification, provided are methods of reducing the BD complexity of the UE when PDCCH signaling (DCI) is added to support new functions. When a new function based on a PDCCH is added in the idle/inactive mode, and when the amount of information provided over the PDCCH is relatively smaller compared to the amount of information over other PDCCHs, the proposed methods may be suitable for ensuring PDCCH decoding performance and/or preventing an increase in the BD complexity of the UE.

In the present disclosure, it is considered that a specific DCI format serving as a reference (referred to as DF-ref) is composed of N bits. In this scenario, if the BS intends to transmit M-bit information (hereinafter info-A) over a PDCCH, where M is an integer smaller than N, the BS may transmit M bits of info-A based on N, which is the size of DF-ref. To distinguish DF-ref used for transmitting info-A from information for other purposes, CRC scrambling may be applied based on a specific RNTI (referred to as RNTI-A).

## Designation of frozen bit(s)

The use of DF-ref may be considered as one possible method of transmitting info-A. To transmit M-bit information through N-bit DF-ref, which is larger in size, a method in which UE assumes unused N-M bits as frozen bit(s) is provided. In this case, the aforementioned frozen bit(s) are bits assumed by the BS and UE to have fixed values, which are predetermined according to a predefined rule regarding the bit states. The frozen bit(s) are determined independently of the remaining M-bit information. For example, the frozen bit(s) may be assumed to always have a fixed value of 0 (or 1), and this proposal may be applied even when the frozen bit(s) have other values (e.g., a specific bit pattern) as long as the BS and UE follow the predefined rule. Typically, the N-M frozen bit(s) and the M information bits may be positioned within DF-ref according to the predefined rule.

The BS may provide the UE with configuration information regarding DF-ref and configuration information regarding info-A. The configuration information may include the type and size of information. The UE may receive the configuration information regarding DF-ref and the configuration information regarding info-A from the BS and apply Proposal 1 based on the information. In this case, the configuration information may be transmitted and received in higher layer signals (e.g., SIB or RRC signals), and adaptive control methods based on DCI or MAC may also be used in combination. The configuration information regarding DF-ref may be provided separately only for the purpose of Proposal 1, but signals provided for PDCCH transmission and reception for other purposes may be referenced.

After transmitting the configuration information, the BS may generate a PDCCH containing info-A and transmit the PDCCH at the location of a designated search space. The BS may generate DCI based on DF-ref and map the frozen bit(s) and info-A to predefined bit positions. Upon receiving the configuration information, the UE may perform BD for PDCCH candidates at the location of the designated search space based on the information. During the reception of DF-ref, the UE may consider the predefined bit positions of the frozen bit(s) and info-A for decoding.

Table 5 shows an example of the above proposal. In Table 5, DCI format 1_0 is used as DF-ref and transmission of info-A is instructed by RNTI-A. A frozen bit field refers to a bit field where the UE assumes a value of 0, Information_1 and Information_2 refer to information included in info-A, and $N_F$, $N_1$, and $N_2$ each represent the number of bits. However, the present disclosure is not limited to the terms or structures used in the example below.

[Table 5]

| The following information is transmitted by means of the DCI format 1_0 with CRC scrambled by RNTI-A: |
| --- |
| Frozen bit field - $N_F$ bits |
| Information_1 - $N_1$ bits |
| Information_2 - $N_2$ bits |
| ... |

**Insertion of padding bit(s)**

As an alternative method to achieve the same effect as the proposed frozen bit designation, a method of using a different DCI format (referred to as DF-new) to transmit different Info-A and adding padding bits to align the size of DF-ref may be used. The proposed method may be applied when DF-new, which is used to transmit Info-A with a size of M bits, is transmitted in a CSS, when DF-ref with a size of N bits, where N is a larger integer than M, is also transmitted in the CSS on the same serving, and when the UE needs to monitor both Info-A and DF-ref. In this case, N-M zero padding bits may be added to DF-new to align the size of DF-new with that of DF-ref.

To this end, the BS may provide the UE with configuration information regarding DF-ref and configuration information regarding info-A included in DF-new. The configuration information may include the type and size of information. The UE may receive the configuration information regarding DF-ref and the configuration information regarding info-A included in DF-new from the BS and apply Proposal 1 based on the information. In this case, the configuration information may be transmitted and received in higher layer signals (e.g., SIB or RRC signals), and adaptive control methods based on DCI or MAC may also be used in combination. The configuration information regarding DF-ref may be provided separately only for the purpose of Proposal 1, but signals provided for PDCCH transmission and reception for other purposes may be referenced.

After transmitting the configuration information, the BS may generate a PDCCH containing info-A if the BS has info-A to transmit. Then, the BS may transmit the PDCCH at the location of a designated search space. The BS may generate DCI based on DF-new and map info-A to predefined bit positions. If the size of DF-new is smaller than the size of DF-ref, zero padding bits may be mapped to align the size of DF-new with that of DF-ref. Upon receiving the configuration information, the UE may perform BD for PDCCH candidates at the location of the designated search space based on the received information. During the reception of DF-new, the UE may consider the predefined bit positions of zero padding and info-A for decoding.

Table 6 shows an example of the above proposal. In Table 6, DCI format 2_X is used as DF-ref and transmission of info-A is instructed by RNTI-A. In the example of Table 6, Information_1 and Information_2 refer to information included in info-A, padding bits refer to a field where zero padding is inserted, and $N_1$ and $N_2$ each represent the number of bits. However, the present disclosure is not limited to the terms or structures used in the example below.

[Table 6]

| The following information is transmitted by means of the DCI format 2_X with CRC scrambled by RNTI-A: |
| --- |
| Information_1 - $N_1$ bits |
| Information_2 - $N_2$ bits |
| Padding bits, if required. |
| ... |

When Proposal 1 is used to prevent an increase in the PDCCH decoding complexity of the UE, a DCI format that is currently used (or a DCI format available in general cases) may be selected as DF-ref. For example, in NR, DCI format 0_0/1_0 defined in 3GPP TS 38.212, which UEs in all states expect to receive, may be used as DF-ref.

For example, when Proposal 1 is applied to a PDCCH-based PEI, DCI for the PEI may be designed based on the size of DCI format 1_0. Additionally, when the size of information transmitted and received through the PEI is $M_1$ and when the size of DCI format 1_0 is $N_1$, the following relationship: $M_1 < N_1$ may be satisfied.

When the proposed frozen bit is used, a PDCCH for the PEI may be generated based on DCI format 1_0, which has a CRC scrambled with a PEI-RNTI. In this case, the BS and UE may assume that $N_1 - M_1$ bits among bits constituting DCI format 1_0 will be set to frozen bit(s) with a value of 0 in transmitting and receiving the PDCCH-based PEI. To this end, the BS may inform the UE of the size of $M_1$ transmitted through the PEI.

When the proposed padding bit insertion method is used, a new DCI format for the PEI may be defined (hereinafter DCI format 2_P), and a PDCCH for the PEI may be generated based on DCI format 2_P with a CRC scrambled with a PEI-RNTI. If the PEI is transmitted and received in a CSS, the BS and UE may assume that zero padding bit(s) will be inserted to align the size of DCI format 2_P with the size of DCI format 1_0, which is transmitted and received in another CSS on the same cell where the CSS is transmitted. To this end, the BS may inform the UE of the size of $M_1$ transmitted by the PEI.

If Proposal 1 is applied to the PEI, there is no increase in complexity due to BD when the UE receives a PDCCH other than the PEI. This is because, when UE monitors multiple DCI formats that share the same starting OFDM symbol and CORESET, the UE may distinguish the multiple DCI formats by simply checking each masking RNTI, without performing additional BD. In particular, when information useful for improving power saving, such as an indication of the availability of a TRS/CSI-RS, is provided by the PEI, the UE may check the PEI as needed without causing additional complexity even if it is not its own PEI monitoring occasion.

On the other hand, if the UE desires to monitor a PDCCH for the PEI, the UE may assume the location and state of bits used as frozen bit(s) and/or zero padding bit(s). Therefore, the UE may perform channel decoding based on the information size of the PEI rather than based on DCI format 1_0 and also expect to improve effective coding gain and decoding reliability. This affects the level of time/frequency accuracy before the UE monitors the PDCCH-based PEI and, consequently, allows the UE to achieve the power saving gain by monitoring smaller SSBs.

## Proposal 2: Adding reserved bit field

In some DCI formats, there may be a reserved bit field (which UEs under specific conditions do not assume to contain meaningful information) (hereinafter referred to as rsv-bit-field) in addition to bit fields that provide necessary information to the UE (hereinafter referred to as an info-bit-field). One of the main purposes of rsv-bit-field may be to ensure forward compatibility, that is, the coexistence between new UEs with added capabilities for handling new functions and information and existing UEs that do not possess these capabilities when the new UEs are introduced. Ensuring the forward compatibility based on rsv-bit-field may be beneficial in DCI formats in search spaces, such as CSS, where an unspecified multitude of UEs perform collectively monitoring. For example, in NR, DCI format 1_0 with a CRC scrambled with a P-RNTI may be commonly transmitted and received by multiple UEs. In addition, 6 or 8 bits of reserved bits are defined in Rel-16 TS 38.212. On the other hand, reserved bits differ from zero padding bits or frozen bits in that the UE is incapable of assuming the state values of the bits. Therefore, when a DCI format subject to decoding includes reserved bits, the UE needs to perform the channel decoding process for the DCI format in the same way as normal information, which may potentially lead to a decrease in the coding gain as the number of reserved bits increases. For example, provided herein is a method of improving the coding gain based on the determination made by the BS while supporting the establishment of forward compatibility based on rsv-bit field.

In this example, it is considered that the size of specific information (hereinafter referred to as info-B) to be transmitted is L bits. If info-B is to be transmitted over a PDCCH, a specific DCI format (hereinafter referred to as DF-add) of N bits is used, and in this case, DF-add may include info-B and a reserved bit field of R bits indicated by the BS.

## Configuration of rsv-bit-field without considering DCI size alignment

When DCI-add is used to transmit info-B, rsv-bit-field may be configured in DCI-add. For example, the configuration and size of rsv-bit-field may be configured by the BS. Specifically, when the BS configures at least one of info-B of L bits and/or rsv-bit-field of R bits and informs the UE, the UE may assume that the number of bits constituting DCI-add is $N = L + R$.

To this end, the BS may inform the UE of configuration information regarding info-B included in DF-add. The configuration information may include the type and size of information. The BS may determine the number of bits of rsv-bit-field included in DF-add carrying info-B for the UE and inform the UE of configuration information including the number of bits of rsv-bit-field. The UE may receive the configuration information regarding info-B and the configuration information regarding rsv-bit-field included in DF-add, which are transmitted by the BS, and operate based on the information according to Proposal 2. In this case, the configuration information may be transmitted and received in higher layer signals (e.g., SIB or RRC signals), and adaptive control methods based on DCI or MAC may also be used in combination. The configuration information regarding info-B and the configuration information regarding rsv-bit-field may be applied differently depending on the functions supported by the UE or the capabilities of the UE. For example, the BS may provide the UE with information regarding releases or capabilities supported by the UE for each specific detail of info-B. Additionally, the information regarding rsv-bit-field may be explicitly provided for information regarding each release or capability supported by the UE or may be implicitly estimated based on other information. The UE may receive the configuration information transmitted by the BS, select applicable configuration information based on the functions and capabilities the UE supports, and perform related operations.

After transmitting the configuration information, the BS may generate a PDCCH including info-B and transmit the PDCCH at the location of a designated search space. The BS may generate DCI based on DF-add and map info-B and, if necessary, rsv-bit-field to predefined bit positions. If rsv-bit-field needs to be configured in DF-add, the BS may arbitrarily select the state of bits of the field. Upon receiving the configuration information, the UE may perform BD for PDCCH candidates at the location of the designated search space based on the received information. During the reception of DF-add, the UE may consider the predefined bit positions and sizes of rsv-bit-field and info-B for decoding.

The RNTI available for CRC scrambling of DCI-add may be either a specifically designated RNTI or RNTIs used for other purposes. That is, the present disclosure is not limited thereto.

Table 7 shows an example of the above proposal. In Table 7, DCI format 2_X is used as DF-add, and transmission of info-B is instructed by RNTI-A. In addition, Information_1 and Information_2 refer to information included in info-B, reserved bits refer to an rsv-bit-field explicitly indicated by the BS, and $N_1$, $N_2$, and $N_r$ each represent the number of bits. Information_2 refers to information of which the availability is determined depending on the capabilities of the UE. If the UE does not support Information_2, an exemplary bit field capable of being assumed as reserved bits is also shown. The example below are intended to illustrate the principles of the present disclosure, and thus the disclosure is not limited thereto.

[Table 7]

| |
|---|
| The following information is transmitted by means of the DCI format 2_X with CRC scrambled by RNTI-A:<br>Information_1 - $N_1$ bits<br>Information_2 - $N_2$ bits. If UE is not Information_2 capable this bit field is reserved Reserved bits - 0 bit if the higher layer parameters ReservedBitSize is not configured or, $N_R$ bits according to higher layer parameters ReservedBitSize.<br>... |

## Configuration of rsv-bit-field considering DCI size alignment

As another method, if a method of adjusting the size of DCI based on DCI-ref with a size of $N_{ref}$ bits, such as Proposal 1, is applied to DCI-add, DCI-add may include L bits constituting info-B and R bits constituting an rsv-bit-field, and the remaining $N_{ref}$ - (L + R) bits may be used as frozen bit(s) and/or zero padding bits. The definition and application of the frozen bit(s) and zero padding bit(s) may follow Proposal 1. Specifically, info-A in Proposal 1 may correspond to a concept that includes both info-B and rsv-bit-field in Proposal 2.

To this end, the BS may inform the UE of configuration information regarding DF-ref and DF-add, and the configuration information may include the type and size of information.

The BS may determine the number of bits of an rsv-bit-field included in DF-add carrying info-B for the UE and inform the UE of configuration information including the number of bits of rsv-bit-field. In this case, the configuration information regarding rsv-bit-field may indicate the size of rsv-bit-field directly or indicate information necessary for the UE to estimate the size of rsv-bit-field (e.g. the size of frozen bit(s) or zero padding bit(s) applied to DCI-add). The UE may receive the configuration information regarding info-B and the configuration information regarding rsv-bit-field included in DF-add, which are transmitted by the BS, and operate based on the information according to the combination of Proposal 1 and Proposal 2. The configuration information may be transmitted and received in higher layer signals (e.g., SIB or RRC signals), and adaptive control methods based on DCI or MAC may also be used in combination. The configuration information regarding info-B and the configuration information regarding rsv-bit-field may be applied differently depending on the functions supported by the UE or the capabilities of the UE. For example, the BS may provide the UE with information regarding releases or capabilities supported by the UE for each specific detail of info-B. Additionally, the information regarding rsv-bit-field may be explicitly provided for information regarding each release or capability supported by the UE or may be implicitly estimated based on other information. The UE may receive the configuration information transmitted by the BS, select applicable configuration information based on the functions and capabilities the UE supports, and perform related operations. On the other hand, the areas of bits designated as frozen bit(s) or zero padding bit(s) may be configured identically on the same cell (BWP or CORESET) regardless of the releases or capabilities supported by the UE.

After transmitting the configuration information, the BS may generate a PDCCH including info-B and transmit the PDCCH at the location of a designated search space. The BS may generate DCI based on DF-add to which the designation of frozen bit(s) and/or the insertion of padding bit(s) are applied. The BS may map info-B and, if necessary, rsv-bit-field to predefined bit positions. The remaining bits not designated for the purposes of info-B and rsv-bit-field may be used as frozen bit(s) and/or zero padding bit(s). If rsv-bit-field needs to be configured in DF-add, the BS may arbitrarily select the state of bits of the field. Upon receiving the configuration information, the UE may perform BD for PDCCH candidates at the location of the designated search space based on the received information. During the reception of DF-add, the UE may consider the predefined bit positions and sizes of rsv-bit-field and info-B for decoding.

The RNTI available for CRC scrambling of DCI-add may be RNTI-A (i.e. an RNTI distinguished from RNTIs for other purposes) as in Proposal 1. This may be for the purpose of distinguishing DCI-ref and DCI-add, which have the same size.

Table 8 shows an example of the above proposal. In Table 8, DCI format 2_X is used as DF-add, transmission of info-B is instructed by RNTI-A, and zero padding bits are added to align with the size with DCI format 1_0. In Table 8, Information _1 and Information_2 refer to information included in info-B, padding bits refer to a field where zero padding is inserted, reserved bits refer to rsv-bit-field explicitly indicated by the BS, and $N_1$, $N_2$, and $N_r$ each represent the number of bits. Information_2 refers to information of which the availability is determined depending on the capabilities of the UE. If the UE does not support Information_2, an exemplary bit field capable of being assumed as reserved bits is also shown. However, the present disclosure is not limited to the terms or structures used in the example below.

[Table 8]

| The following information is transmitted by means of the DCI format 2_X with CRC scrambled by RNTI-A: |
|---|
| Information_1 - $N_1$ bits |
| Information_2 - $N_2$ bits. If UE is not Information_2 capable this bit field is reserved Reserved bits - 0 bit if the higher layer parameters ReservedBitSize is not configured or, $N_R$ bits according to higher layer parameters ReservedBit-Size. |
| Padding bits, if required. |
| ... |

When Proposal 1 and Proposal 2 are used in combination to prevent an increase in the PDCCH decoding complexity of the UE, a DCI format that is currently used (or a DCI format available in general cases) may be selected as DF-ref. For example, in NR, DCI format 0_0/1_0 defined in 3GPP TS 38.212, which UEs in all states expect to receive, may be used as DF-ref.

For example, when the configuration of rsv-bit-field without consideration of DCI size alignment proposed above is used without consideration of the proposed DCI size alignment, a new DCI format for the PEI may be defined (hereinafter DCI format 2_Q), and a PDCCH for the PEI may be generated based on DCI format 2_Q with a CRC scrambled with a PEI-RNTI. In this case, DCI format 2_Q with the CRC scrambled with the PEI-RNTI may include a field for conveying information regarding the PEI, and a reserved bit field of which the application is determined depending on the release or capability of the UE may also be included. The size of the reserved bit field may be configured by the BS. If the BS does not configure the size of the reserved bit field or specifies a size of 0, and if the UE is capable of supporting all PEI-related information configured by the BS, the UE may not expect reserved bits to be explicitly specified in DCI format 2_Q.

For example, when the configuration of rsv-bit-field considering DCI size alignment proposed above is used, if Proposal 1 and Proposal 2 are used in combination, DCI for a PDCCH-based PEI may be designed based on the size of DCI format 1_0. When the size of information transmitted and received through the PEI is determined as $L_1$, when the size of a reserved bit field is determined as $R_1$ bit, and when the size of DCI format 1_0 is determined as $N_1$, it may be considered that the value of $L_1 + R_1$ is smaller than $N_1$.

In the above example, if the designation of frozen bit(s) proposed in Proposal 1 is applied, the PDCCH for the PEI may be generated based on DCI format 1_0 with a CRC scrambled with the PEI-RNTI. In this case, it can be assumed that, during the transmission and reception of the PDCCH-based PEI, both the BS and UE will set the N1-(L1+R1) bits of the DCI format 1_0 to a value of 0 as frozen bit(s). The BS and UE may assume that during transmission and reception of the PDCCH-based PEI, $N_1 - (L_1 + R_1)$ bits among bits constituting DCI format 1_0 will be set as frozen bit(s) with a value of 0. To this end, the BS may inform the UE of information regarding the size of $M_1$ and $R_1$ transmitted through the PEI.

In the above example, if the insertion of padding bit(s) proposed in Proposal 1 is applied, a new DCI format for the PEI may be defined (hereinafter DCI format 2_Q), and a PDCCH for the PEI may be generated based on DCI format 2_Q with a CRC scrambled with the PEI-RNTI. If the PEI is transmitted and received in a CSS, the BS and UE may assume that zero padding bit(s) will be inserted to align the size of DCI format 2_Q with the size of DCI format 1_0 transmitted and received in another CSS on the same cell where the CSS is transmitted. To this end, the BS may inform the UE of information regarding the size of $L_1$ and $R_1$ transmitted through the PEI.

In current NR, different RNTI values are mainly applied to the same DCI format to distinguish information. When there is a difference in the amount of information between distinct information, the areas of reserved bits configured in the DCI format may be used. According to the configuration of the reserved bit field, it is difficult to configure a flexible wireless communication environment between the BS and UE. There are limitations that additional techniques for improving the decoding performance of the UE could not be applied. On the other hand, when Proposal 2 is applied to the PEI as proposed in this specification, the BS may or may not configure a small-sized reserved bit field as needed to ensure the decoding performance of the UE regarding the PDCCH-based PEI.

If new functions and information are added to the PEI in the future, and if BS desires to support the new functions and information, a DCI field for representing the new functions and information may be configured to be received by existing UEs as a reserved bit field, depending on the configuration of the BS. Forward compatibility may be guaranteed if necessary.

## Proposal 3: Determining PDCCH candidates monitoring rule for new channel

In NR, considering the complexity due to BD and channel estimation that occurs while the UE monitors a PDCCH, the following methods are currently used: adjusting the size of DCI that the UE is capable of monitoring per cell, limiting the maximum number of PDCCH candidates that the UE is capable of monitoring for each cell/slot (hereinafter referred to as BD limit), or limiting the maximum number of non-overlapped CCEs that the UE is capable of monitoring for each cell/slot (hereinafter referred to as CCE limit). Therefore, when a DCI format with a new size is introduced and/or when monitoring of a new search space is added, monitoring of PDCCHs that the UE expects to receive may be affected. This proposal may be applied to address potential issues related to the BD limit/CCE limit that may arise in the following cases: when a new RNTI value is applied to an existing DCI format, when a new DCI format with the same size as the existing DCI format is introduced, or when a DCI format with a new size is introduced,

In the following, proposed methods will be described based on the PDCCH-based PEI as discussed in Rel-17 NR power-saving items. However, the present disclosure is not limited to these.

## Proposal 3-1: Configuring not to expect reception based on specific RNTI in connected mode.

In the ongoing NR Rel-17 standardization process, the introduction of a PEI is being discussed to improve the paging performance of the UE. In particular, the PEI may be expected to provide advantageous effects in increasing the power saving gain for a UE that monitors paging with the DRX cycle such as a UE in the idle/inactive mode. On the other hand, when the UE is in the connected mode, the requirements for paging monitoring may be set relatively low. In addition, there are ways to improve the performance of transmission and reception over physical channels such as a PDCCH by designating reference signals such as a CSI-RS/TRS, and thus the gain in power saving efficiency by the PEI may not be high.

Accordingly, provided herein is a method of configuring the UE to stop monitoring a PDCCH-based PEI, which is configured while in the idle/inactive mode, when transitioning to the connected mode. Specifically, when a specific DCI format (hereinafter DCI-C) with a CRC scrambled by a specific RNTI (hereinafter RNTI-C) is used for the purpose of the PEI in the idle/inactive mode, if the UE is in the connected mode, the UE may be configured not to expect that the CRC of DCI-C is scrambled by RNTI-C. If the CRC of DCI-C is allowed to be scrambled by an RNTI other than RNTI-C, the UE may expect reception in connected mode for all (or some) of the remaining RNTIs.

This may be to reduce the complexity of UE operations by not causing restrictions on the PDCCH monitoring operation of the UE due to the BD limit/CCE limit in the connected mode where the power saving gain is expected to be relatively low or by not creating additional procedures to avoid such issues.

## Proposal 3-2: Method of lowering monitoring priority of specific RNTI-related search space (set)

According to NR specifications, when the UE determines PDCCH candidates to monitor based on the BD limit/CCE limit, information regarding the type and ID of a search space set in which a corresponding PDCCH is transmitted may be considered. Specifically, it is assumed that the UE is capable of monitoring PDCCH candidates for all CSS sets. The UE may determine whether to monitor PDCCH candidates included in a USS based on the ID of the USS and the remaining number of times of monitoring after CSS monitoring at the slot level. In this case, if a PDCCH-based PEI is introduced, the PEI may be transmitted and received in the CSS. This may further complicate the CSS scheduling by the BS considering the BD limit/CCE limit and may also increase the possibility that PDCCH candidates belonging to the USS are dropped.

In order to solve these issues, when monitoring of PDCCH candidates is determined based on the BD limit/CCE limit, if the PDCCH-based PEI is transmitted in the CSS, the priority of the search space set where the PEI is transmitted and received may be determined as the lowest priority. The UE determines whether to monitor PDCCH candidates by prioritizing PDCCH candidates on the CSS and PDCCH candidates on the USS in a specific slot. If there are remaining monitoring opportunities for PDCCH monitoring, the UE may monitor PDCCH candidates for the PEI. Specifically, PEI monitoring may only be allowed if the remaining number of times of monitoring is greater than the total number of PDCCH candidates for carrying the PEI.

This method may be to prevent scheduling of the current CSS and USS from being restricted due to the addition of a new CSS and de-prioritize PEI monitoring where the expected gain is relatively low. Furthermore, compared to completely excluding PEI monitoring in the connected mode, this method may provide the UE with opportunities to receive the PEI, allowing the UE to obtain information related to power saving.

**Proposal 3-3: Monitoring is allowed when there is transmission of PDCCH candidates with same (size) DCI format.**

An RNTI used for CRC scrambling of a PDCCH may be used to distinguish the purpose of the PDCCH. In this case, if there are multiple RNTI values that UE is capable of expecting for a specific DCI format at the same location, the UE may monitor information corresponding to the multiple RNTIs by performing BD operation for PDCCH candidates once. This may provide benefits in terms of the complexity and power saving efficiency of the UE since there is no increase in the BD limit/CCE limit of the UE.

Considering these characteristics, the UE may be limited to perform monitoring for receiving a PDCCH-based PEI only when the UE performs monitoring of the same DCI format (or DCI format with the same size) as the DCI format for the PEI. The above method may be configured to be applied only when the UE is capable of expecting to receive the PEI in the connected mode. For example, when a DCI format (hereinafter DCI-PEI) used for transmission and reception of the PEI is generated based on DCI format 1_0, or when size alignment is performed such that the DCI format has the same size as DCI format 0_0/1_0 (i.e., when Proposal 1 proposed in the present disclosure is applied), the application of the above method may be considered. To distinguish DCI-PEI from DCI formats with the same size, it may be considered that a separate RNTI (hereinafter referred to as PEI-RNTI) used for transmitting and receiving the PEI may be considered. If the UE monitors PDCCH candidates where the CRC of DCI format 0_0/1_0 is scrambled with a specific RNTI (e.g. SI-RNTI, RA-RNTI, MsgB-RNTI, or P-RNTI), the UE may monitor DCI-PEI with a CRC scrambled with PEI-RNTI for the PDCCH candidates.

When the method proposed above is used in combination with Proposal 3-1, for example, when the UE monitors PDCCH candidates that satisfy the conditions of Proposal 3-3, instead of being configured with a separate monitoring location for PEI transmission and reception in the connected mode, the UE may expect to receive the PEI.

The proposed method may be expected to provide benefits by offering opportunities for PEI reception without impacting the BD limit/CCE limit of the UE.

**Proposal 3-4: Applying different DCI formats depending on operational mode of UE**

The constraint issue on monitoring PDCCH candidates due to the BD limit/CCE limit is primarily considered in the connected mode. This is because the number of search space sets and DCI formats that the UE is capable of expecting in the connected mode may be higher than that in the idle/inactive mode. In particular, when the UE transitions from the idle/inactive mode to the connected mode, the may be configured with various CSSs and USSs that the UE needs to monitor through dedicated RRC signaling, which may lead to constraints on the PDCCH candidate monitoring due to the BD limit/CCE limit.

Considering these characteristics, provided herein is a method of applying different assumptions to reception of a PEI that UE is capable of expecting in the idle/inactive mode and connected mode.

The assumptions for the PEI reception may include the type or format of DCI. For instance, a DCI format for PEI transmission in the idle/inactive mode (referred to as DCI-pei) may be allowed to have a relatively smaller number of bits compared to DCI format 1_0. In addition, DCI format 1_0 may be used in the connected mode. In this case, for transmission of a PDCCH used for the PEI in the connected mode, an identifier (e.g., RNTI) that is capable of being distinguished from transmissions for other purposes based on DCI format 1_0 may be used. If DCI format 1_0 has a size of N bits, and PEI information is composed of $M (\leq N)$ bits, the remaining N-M bits may be considered as reserved bits or set as frozen bit(s) as in Proposal 1.

As another example, a DCI format for PEI transmission in the idle/inactive mode (DCI-pei) may be allowed to have a relatively smaller number of bits compared to DCI format 1_0. In the connected mode, the size of DCI-pei may be aligned with the size of DCI format 1_0. To distinguish DCI-pei from other DCI formats with the same size (including DCI format 1_0), an identifier such as RNTI may be used, allowing differentiation from transmissions for other purposes. As a specific method, if DCI format 1_0 has a size of N bits and PEI information is composed of $M (\leq N)$ bits, the designation of frozen bit(s) and/or insertion of padding bit(s) proposed in Proposal 1 may be applied to the remaining N-M bits.

This method may be suitable for the purpose of using an appropriate DCI structure based on the UE mode. Specifically, the method may reduce the number of bits in DCI in the idle/inactive mode to improve the power saving gain and align DCI sizes in the connected mode to reduce the impact on the BD limit/CCE limit of the UE.

### Proposal 4: Determining aggregation level for PEI

In NR, to adjust the number of times that the UE performs PDCCH blind decoding, an aggregation level (AL) and the number of candidates that the UE is capable of expecting when monitoring a specific SS (set) are predefined. For example, when the UE is in the idle/inactive mode, the UE may expect the AL and the number of candidates defined by specifications for Type0/0A/2-PDCCH CSS sets expected by the UE in a DL BWP. Such limitations on the AL and the number of candidates may provide the power saving gain by ensuring the minimum decoding reliability required for a PDCCH while preventing the UE from performing unnecessary BD. Table 9 below is extracted from TS 38.213. Table 9 is used to determine the CCE AL and the maximum possible number of PDCCH candidates. Table 9 may be applied to the Type0/0A/2-PDCCH CSS set described above.

[Table 9]

| CCE Aggregation Level | Number of Candidates |
|---|---|
| 4 | 4 |
| 8 | 2 |
| 16 | 1 |

For a CSS set in which the PEI is transmitted, the size of the AL and/or PDCCH candidates may also be predefined and limited to enhance the power saving gain of the UE.

Hereinafter, a method of determining the CCE AL and the number of PDCCH candidates that the UE is capable of expecting for a CSS set in which the PEI is transmitted and received will be described.

### Proposal 4-1: Using multiple tables expected by idle/inactive mode UE

In general, for a PEI, it may be advantageous to use a smaller payload compared to paging DCI to increase PDCCH decoding reliability. Therefore, the PEI may be decoded even with a lower AL compared to other types of CSS sets. Furthermore, to reduce the number of BD operations, it may also be considered to limit the number of applicable ALs to be lower than 3.

Accordingly, when the UE is configured with a CSS set for monitoring the PEI in a DL BWP, multiple tables may be defined for the CCE AL and PDCCH candidates applicable to the CSS set, and one of the tables may be selected and applied. Table 9, which is defined in TS 38.213, may be used as one of the multiple tables for the CCE AL and PDCCH candidates. Additionally, tables including AL values smaller than those of Table 9 may be defined. Table 10 is one example of such a table for the CCE AL and PDCCH candidates, which may be additionally defined. The present disclosure is not limited to Table 10, and the CCE AL and PDCCH candidates may be modified in various ways.

[Table 10]

| CCE Aggregation Level | Number of Candidates |
|---|---|
| 2 | 8 |
| 4 | 4 |

When multiple tables are defined for combinations of CCE ALs and PDCCH candidates as described above, the BS may determine a table that is actually applied and explicitly indicate the table in a higher layer signal. For example, when selecting one of two tables, the BS may indicate the table to be used with an indicator (e.g., one-bit indication) transmitted in an SIB. For example, different tables may be configured for cases where the one bit is 0 and 1, respectively. When the one-bit indicator is not present in the higher layer signal, the existing table (e.g., Table 9 above) may be used. When the indicator exists and represents a value of 0 (or 1), it may specify a new table (e.g., Table 10 above) and the other case may be reserved. This explicit instruction method may be advantageous in terms of ensuring the scheduling flexibility of the BS.

Alternatively, the table to be used may be determined based on the size of a payload included in PEI DCI. For example, based on a predetermined integer N, if the number of DCI bits included in the PEI DCI is greater than N, the existing table (e.g. Table 9 above) may be used. Conversely, if the number of DCI bits is smaller than N, a new table (e.g. Table 10 above) may be used. This method may be advantageous in that there is no additional signaling overhead, and at the same time, since the method considers the DCI payload size, stable PEI performance may be expected in that the AL is determined considering the decoding reliability of a PDCCH on which the PEI is transmitted.

**Proposal 4-2: Applying relative value to existing table.**

When a CSS set is configured for PEI monitoring in a DL BWP, the values of CCE ALs and PDCCH candidates applied to the CSS set may be determined as relative values to the existing table (e.g., Table 9). This method may be advantageous in terms of reusing the previously defined Table 9 while indicating new values simultaneously.

As a specific example of using relative values, a specific integer $N_{MP}$ may be used. Assuming that the size of a CCE AL applied to a CSS set for a PEI is $AL_{PEI}$, and the size of a CCE AL applied by the existing table is $AL_{Legacy}$, values that satisfy $AL_{PEI} = AL_{Legacy}/N_{MP}$ may be used for the PEI. Additionally, assuming that the maximum number of PDCCH candidates applied to the CSS set for the PEI is $NC_{PEI}$ and the maximum number of PDCCH candidates applied by the existing table is $NC_{Legacy}$, values that satisfy $NC_{PEI} = NC_{Legacy} * N_{MP}$ may be used for the PEI. For example, even if not explicitly described in specifications, the UE may be configured to expect that the values of ALs and PDCCH candidates applied to the CSS set for the PEI will be applied in a form similar to Table 11. In this case, the value of $N_{MP}$ may be selected to satisfy the condition of powers of 2 (i.e., $2^X$).

[Table 11]

| CCE Aggregation Level | Number of Candidates |
|---|---|
| $4 / N_{MP}$ | $4 * N_{MP}$ |
| $8 / N_{MP}$ | $2 * N_{MP}$ |
| $16 / N_{MP}$ | $1 * N_{MP}$ |

On the other hand, relative values may also be explicitly indicated in a higher layer signal from the BS. For example, when a specific integer $N_{MP}$ is used as the relative value in the example above, the BS may determine the value of $N_{MP}$ and explicitly indicate the value of $N_{MP}$ to the UE in an SIB. Such explicit indication method may be advantageous in terms of ensuring the scheduling flexibility of the BS.

Another specific method is that a relative value to be used may be determined based on the size of a payload included in PEI DCI. For example, based on a predetermined integer N, the value of $N_{MP}$ applied when the number of PEI DCI bits is greater than N may differ from the value of $N_{MP}$ applied when the number of PEI DCI bits is smaller than N. This method may be advantageous in that there is no additional signaling overhead and, at the same time, since the method considers the DCI payload size, stable PEI performance may be expected in that the AL is determined considering the decoding reliability of a PDCCH on which the PEI is transmitted.

**Proposal 5: Stop PEI monitoring indication over PEI**

In NR, a method of extending PDCCH monitoring occasions that configures a paging occasion (PO) by a factor of X may be used for paging operations in a shared spectrum. Specifically, according to the method described in NR TS 38.304, 'S' denotes the number of actually transmitted SSBs, which is determined by *ssb-PositionsInBurst* transmitted in SIB1, and 'X' denotes the repetition number of PDCCH monitoring occasions determined by *nrofPDCCH-MonitoringOccasionPerSSB-InPO.* In this case, the number of consecutive PDCCH monitoring occasions that configures the PO may be determined as S*X. The UE may perform BD of a paging PDCCH on the configured PO. This method may be to ensure stable PDCCH transmission and reception even when the frequency is occupied by other signals/channels due to the nature of the shared spectrum. However, from the perspective of the UE, there is a drawback in that power consumption increases due to an increase in the number of times that PDCCH BD is executed. To address such issues, a method of indicating *'stopPagingMonitoring'* with the third bit of a short message field of DCI format 1_0 (referred to as paging DCI) scrambled with a P-RNTI may be used in the shared spectrum. If the UE receives a paging DCI that indicates a value of 1 for *'stopPagingMonitoring',* the UE may stop BD for the remaining PDCCH monitoring occasion(s) of the corresponding PO.

When a PEI is supported in the shared spectrum, a method of extending PDCCH monitoring occasions that configure a PEI occasion (PEI-O) for the same purpose as paging may be used. For example, the PEI-O may be composed of S*Y consecutive PDCCH monitoring occasions as in the PO. In this case, the value of Y may be determined based on *nrofPDCCH-MonitoringOccasionPerSSB-InPO,* which is configured for the PO configuration, or a new parameter specifically configured for the PEI-O (e.g., *nrofPDCCH-MonitoringOccasionPerSSB-InPEI)* may be introduced. If the length of the PEI-O is extended, there is an advantage of increasing the number of PDCCH monitoring occasions as in the PO, thereby increasing the paging reception opportunities of the UE. However, there may be a drawback in that power consumption increases due to an increase in the number of times that PDCCH BD is executed.

To address such issues, the PEI may include an indicator (e.g., one-bit indicator) for indicating *'stopPeiMonitor-*

*ing'* to stop PDCCH monitoring. When a value of Y > 1 is configured (e.g., when Y > 1 is configured by *nrofPDCCH-MonitoringOccasionPerSSB-InPO* or *nrofPDCCH-MonitoringOccasionPerSSB-InPEI),* the indicator (one bit) may be implicitly configured in the PEI. This may be to support operations necessary for power saving without additional signaling overhead. Alternatively, when a value of Y > 1 is configured, and when the BS indicates the inclusion of the indicator indicating *'stopPeiMonitoring'* in PEI DCI, the indicator may be configured. This may be to allow the BS to control the reception probability of the PEI by managing the overhead of the PEI DCI. When the *'stopPeiMonitoring'* indicator is configured in the PEI DCI and when the UE confirms that the indicator is indicating a specific value (e.g., 1) upon receiving the PEI, the UE may be configured not to expect reception of a PEI PDCCH one some or all of the remaining PDCCH monitoring occasions of the corresponding PEI-O.

As another method, if the UE receives a PDCCH on which a PEI is transmitted on a PEI-O even once, the UE may be configured to no longer receive a PEI PDCCH on all or some of the remaining PDCCH monitoring occasions of the corresponding PEI-O. In this case, receiving the PDCCH means that the UE performs PDCCH decoding, checks a PDCCH CRC with an RNTI used for the PEI, and successfully detects the PDCCH. When this method is used, it may be advantageous in terms of reducing the overhead of PEI DCI since there is no need to add separate indications.

As another method, if there is no information indicating enabling of DCI fields in PEI DCI received by the UE, the UE may interpret it as an instruction to stop PEI monitoring, and thus, the UE may no longer receive a PEI PDCCH on all or some of the remaining PDCCH monitoring occasions of a PEI-O. For example, the DCI fields in the PEI DCI may include a UE group/subgroup indication field (i.e., a field indicating whether to wake up through a bitmap that distinguishes UE groups and/or subgroups). If all UE groups/subgroups are instructed to be in the non-wake up state (e.g. if UE group/subgroup fields all represent a value of 0 and all UEs that have received a PEI do not expect to receive a paging PDCCH at the location of the associated PO), it may be included as a case where there is no enabling information. Additionally/alternatively, if TRS availability indication information is included in PEI DCI and if there is no TRS resource indicating enabling of a corresponding DCI field, it may be included as a case where there is no enabling information. Additionally/alternatively, if information regarding an SI change indication and an ETWS/CMAS notification is included in PEI DCI and if there is no information indicating enabling of a corresponding DCI field, it may be included as a case where there is no enabling information. This method may be a sub-condition included when the UE described in the other method above receives a PDCCH on a PEI-O at least once. The method may be to configure predetermined operations between the BS and the UE such that even if the UE receives a PEI where all information is disabled, the UE does not treat the PEI as an error case but recognizes the PEI as a means of transmitting information.

In the proposals described above, if the UE is configured not to receive a PEI in some remaining periods, those periods may be determined in units of S PDCCH monitoring occasions from the first PDCCH monitoring occasion where a PEI-O begins. For example, if the UE receives a PEI on a P-th PDCCH monitoring occasion of a PEI-O, the UE may receive a PEI PDCCH on PDCCH monitoring occasions up to a (ceil(P/S)*S)-th PDCCH monitoring occasion. Thereafter, the UE may no longer receive any PEI PDCCHs from a (ceil(P/S)*S+1)-th PDCCH monitoring occasion. This may be to ensure transmission and reception of a PEI in all SSB beam directions where the UE is capable of expecting reception, considering the multi-beam operation. If different information is transmitted on each PDCCH monitoring occasion within a PEI-O (e.g., when TRS availability indication information differs), the UE may obtain different information from each PDCCH monitoring occasion.

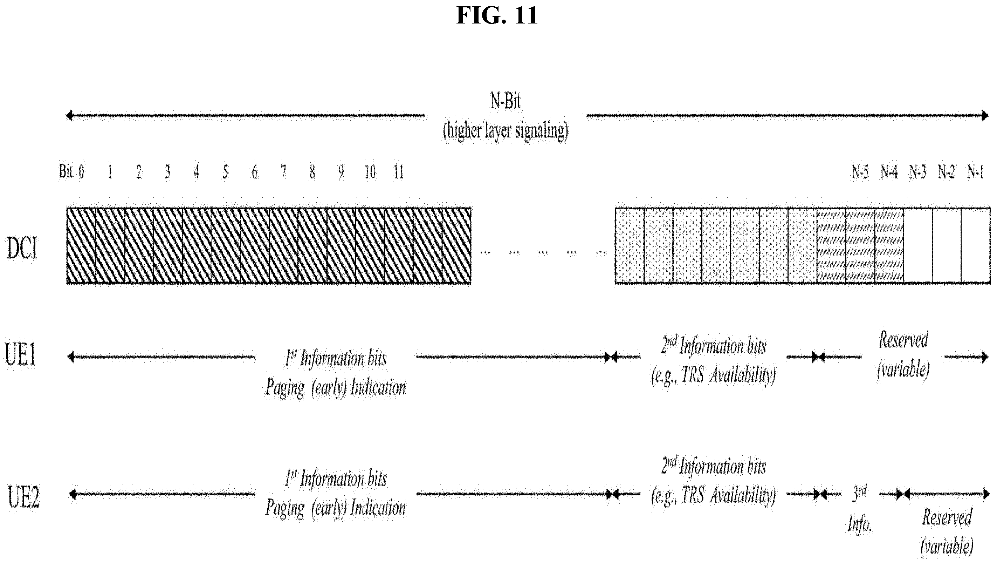

FIG. 11 is a diagram for explaining a DCI format for a PEI according to an embodiment of the present disclosure.

Referring to FIG. 11, the DCI format for the PEI may be received by one or two or more UEs. For convenience, it is assumed that the DCI format for the PEI is mapped to a CSS set commonly monitored by UE 1 and UE 2. UE 1 and UE 2 may be UEs with different capabilities (or different UE classes). Additionally, the DCI format for the PEI may be a new DCI format different from DCI formats defined in in the Rel. 15 to Rel. 16 NR specifications.

The BS may instruct, through higher layer signaling, that the payload size of the DCI format for the PEI is N bits for both UE 1 and UE 2 in common.

UE 1 and UE 2 each assume that the DCI payload size is N bits and may attempt to detect DCI for the PEI in the CSS set based on a PEI-RNTI.

The DCI information bit size assumed by UE 1 and UE 2 may be different. For example, UE 1 may assume that the DCI information bits are a total of M bits, while UE 2 may assume that the DCI information bits are a total of L bits (where M ≠ L). In FIG. 11, it is assumed that M < L. Specifically, referring to FIG. 11, UE 1 assumes that the M DCI information bits are composed of first information bits for paging indication and second information bits for TRS availability. On the other hand, UE 2 assumes that the DCI L information bits not only include first information bits for paging indication and second information bits for TRS availability but also third information bits configured in addition to the DCI.

Thus, the size of reserved bits of the DCI for the PEI may be a variable determined based on network signaling and the size of information bits interpreted by each UE.

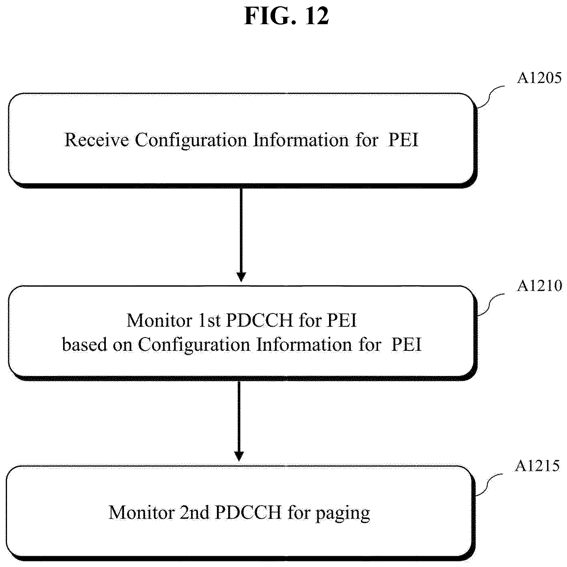

FIG. 12 is a diagram for explaining a method by which a UE receives a signal according to an embodiment of the present disclosure.

Referring to FIG. 12, the UE may receive configuration information regarding a PEI through higher layer signaling (A1205).

Based on the configuration information for the PEI, the UE may monitor a first PDCCH carrying DCI with a format for the PEI in an RRC idle or RRC inactive state. (A1210).

Based on detection of the DCI with the format for the PEI, the UE may monitor a second PDCCH for paging on a PO associated with the PEI (A1215).

The configuration information for the PEI may include information regarding a DCI payload size 'N' of the format for the PEI.

The DCI with the format for the PEI may include first information bits related to the paging and second information bits related to TRS availability in the RRC idle or RRC inactive state.

A size 'M' of total information bits of the DCI with the format for the PEI including the first information bits and the second information bits may not exceed the DCI payload size 'N'.

Based on the size 'M' of the total information bits and the DCI payload size 'N' included in the configuration information for the PEI, the UE may detect the DCI with the format for the PEI by assuming 'N' - 'M' reserved bits.

A size 'N' - 'M' of the reserved bits may be a variable determined based on the size 'M' of the total information bits determined by the UE and the DCI payload size 'N' configured to the UE through the higher layer signaling.

A CRC of the first PDCCH may be scrambled with a PEI-RNTI. The UE may monitor the first PDCCH in a CSS set based on the PEI-RNTI.

The DCI with the format for the PEI may be common to one or two or more UEs including the UE.

Monitoring the first PDCCH carrying the DCI with the format for the PEI may be performed only when the UE is in the RRC idle or RRC inactive state. In the RRC connected state, the UE may stop monitoring the first PDCCH carrying the DCI with the format for the PEI.

The higher layer signaling may be related to an SIB.

The configuration information for the PEI may include information regarding a size of the first information bits and information regarding a size of the second information bits.

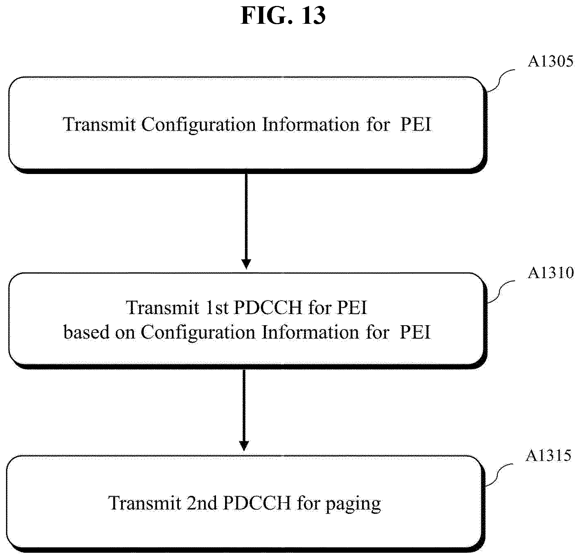

FIG. 13 is a diagram for explaining a method by which a BS transmits a signal according to an embodiment of the present disclosure.

Referring to FIG. 13, the BS may transmit configuration information regarding a PEI through higher layer signaling (A1305).

Based on the configuration information for the PEI, the BS may transmit a first PDCCH carrying DCI with a format for the PEI to a UE in an RRC idle or RRC inactive state (A1310).

The BS may transmit a second PDCCH for paging on a PO associated with the PEI based on the DCI with the format for the PEI (A1315).

The configuration information for the PEI may include information regarding a DCI payload size 'N' of the format for the PEI.

The DCI with the format for the PEI may include first information bits related to the paging and second information bits related to TRS availability in the RRC idle or RRC inactive state.

A size 'M' of total information bits of the DCI with the format for the PEI including the first information bits and the second information bits may not exceed the DCI payload size 'N'.

Based on the size 'M' of the total information bits and the DCI payload size 'N' included in the configuration information for the PEI, the BS may configure 'N' - 'M' reserved bits.

A size 'N' - 'M' of the reserved bits may be a variable determined based on the size 'M' of the total information bits and the DCI payload size 'N' configured through the higher layer signaling.

A CRC of the first PDCCH may be scrambled with a PEI-RNTI. The BS may transmit the first PDCCH in a CSS set based on the PEI-RNTI.

The DCI with the format for the PEI may be common to one or two or more UEs including the UE.

Transmitting the first PDCCH carrying the DCI with the format for the PEI may be performed only when the UE is in the RRC idle or RRC inactive state. The BS may stop transmitting the first PDCCH carrying the DCI with the format for the PEI when the UE is in the RRC connected state.

The higher layer signaling may be related to an SIB.

The configuration information for the PEI may include information regarding a size of the first information bits and information regarding a size of the second information bits.

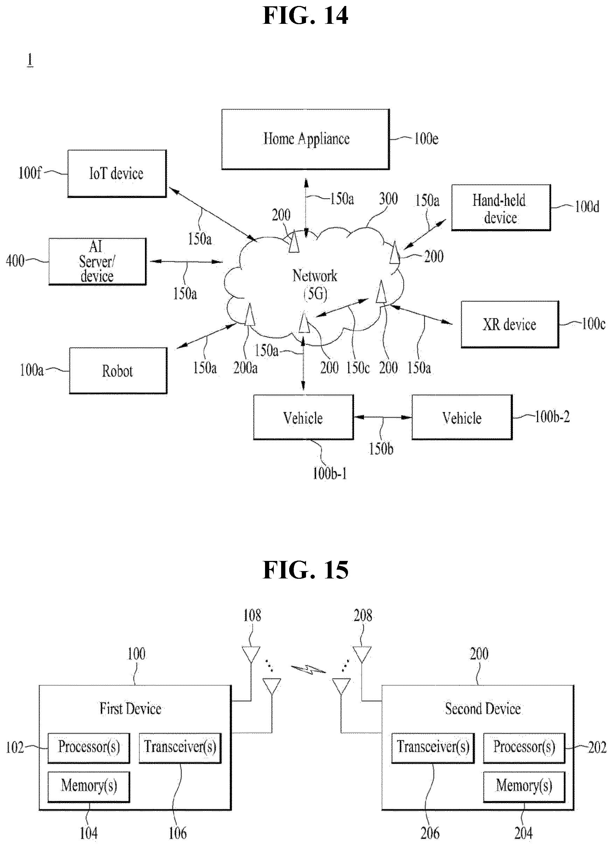

FIG. 14 illustrates a communication system 1 applied to the present disclosure.

Referring to FIG. 14, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 15 illustrates wireless devices applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

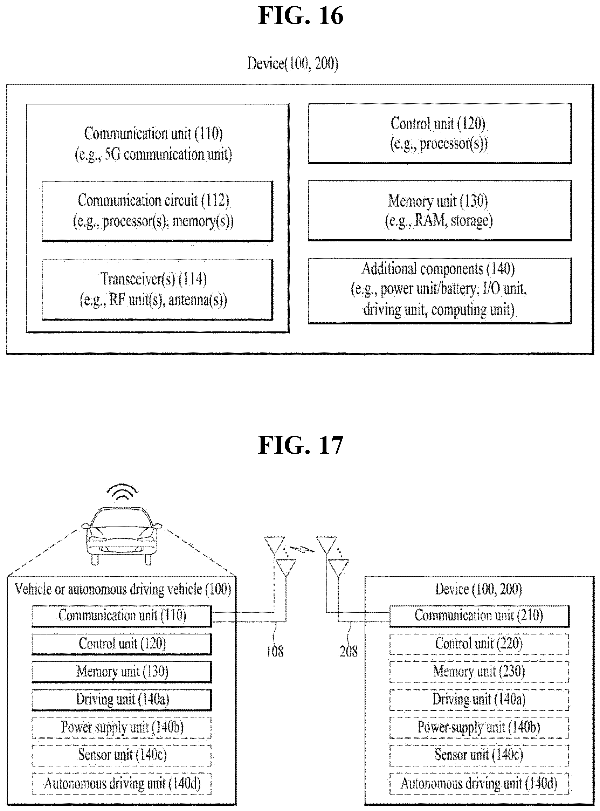

FIG. 16 illustrates another example of a wireless device applied to the present disclosure. The wireless device may be implemented in various forms according to a use-case/service (refer to FIG. 14).

Referring to FIG. 16, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 17 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 17, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

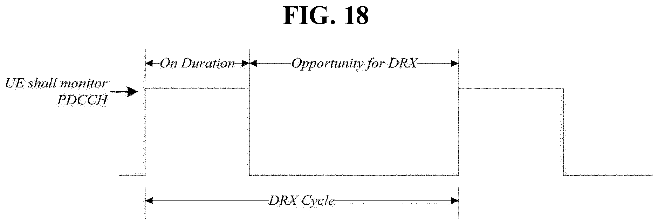

FIG. 18 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC _CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 18, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 12 describes a DRX operation of a UE (in the RRC_CONNECTED state). Referring to Table 12, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 12]

|  | Type of signals | UE procedure |
|---|---|---|
| 1st step | RRC signalling(MAC-CellGroupConfig) | - Receive DRX configuration information |
| 2nd Step | MAC CE((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle.
- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the present disclosure in prescribed forms. And, the respective elements or features may be considered as selective unless they are explicitly mentioned.

## INDUSTRIAL APPLICABILITY

The present disclosure is applicable to UEs, BSs, or other apparatuses in a wireless mobile communication system.

## Claims

1. A method performed by a user equipment, UE, the method comprising:

   receiving (A1205) configuration information for a paging early indication, PEI, through higher layer signaling;
   monitoring (A1210) a first physical downlink control channel, PDCCH, carrying downlink control information, DCI, having a format for the PEI in a radio resource control, RRC, idle or RRC inactive state, based on the configuration information for the PEI; and
   monitoring (A1215) a second PDCCH for paging in a paging occasion, PO, associated with the PEI based on detection of the DCI having the format for the PEI,
   **characterized in that** the configuration information for the PEI includes information regarding a DCI payload size 'N' of the format for the PEI,
   wherein the DCI having the format for the PEI includes first information bits related to the paging and second information bits related to tracking reference signal, TRS, availability in the RRC idle or RRC inactive state,
   wherein a size 'M' of total information bits of the DCI having the format for the PEI is equal to or less than the DCI payload size 'N', and
   wherein based on the size 'M' of the total information bits and the DCI payload size 'N' remaining 'N' - 'M' bits are reserved bits.

2. The method according to claim 1, wherein a size 'N' - 'M' of the reserved bits is a variable determined based on the size 'M' of the total information bits determined by the UE and the DCI payload size 'N' configured to the UE through the higher layer signaling.

3. The method according to claim 1, wherein a cyclic redundancy check, CRC, of the first PDCCH is scrambled with a paging early indication-radio network temporary identifier, PEI-RNTI.

4. The method according to claim 3, wherein the UE monitors the first PDCCH in a common search space, CSS, set based on the PEI-RNTI.

5. The method according to claim 1, wherein the DCI having the format for the PEI is common to one or two or more UEs including the UE.

6. The method according to claim 1, wherein monitoring the first PDCCH carrying the DCI having the format for the PEI is performed only in the RRC idle or RRC inactive state.

7. The method according to claim 6, wherein the UE stops monitoring the first PDCCH carrying the DCI having the format for the PEI in a RRC connected state.

8. The method according to claim 1, wherein the higher layer signaling is related to a system information block, SIB.

9. The method according to claim 1, wherein the configuration information for the PEI includes information regarding a size of the first information bits and information regarding a size of the second information bits.

10. A computer-readable medium having recorded thereon a program which, when executed by a processor of a user equipment, UE, cause the UE to perform the method according to any one of preceding claims.

**11.** A device (100) comprising:

at least one processor (102); and
at least one memory (104) configured to store instructions that, when executed by the at least one processor (102), causes the device (100) to perform operations, the operations comprising:

receiving (A1205) configuration information for a paging early indication, PEI, through higher layer signaling;
monitoring (A1210) a first physical downlink control channel, PDCCH, carrying downlink control information, DCI, having a format for the PEI in a radio resource control, RRC, idle or RRC inactive state, based on the configuration information for the PEI; and
monitoring (A1215) a second PDCCH for paging in a paging occasion, PO, associated with the PEI based on detection of the DCI having the format for the PEI,
**characterized in that** the configuration information for the PEI includes information regarding a DCI payload size 'N' of the format for the PEI,
wherein the DCI having the format for the PEI includes first information bits related to the paging and second information bits related to tracking reference signal, TRS, availability in the RRC idle or RRC inactive state,
wherein a size 'M' of total information bits of the DCI having the format for the PEI is equal to or less than the DCI payload size 'N', and
wherein based on the size 'M' of the total information bits and the DCI payload size 'N' remaining 'N' - 'M' bits are reserved bits.

**12.** The device (100) according to claim 11, further comprising:
at least one transceiver (106) configured to transmit or receive radio signals under control of the at least one processor (102).

**13.** The device (100) according to claim 11, wherein the device (100) is a user equipment, UE, configured to operate in a wireless communication system.

**14.** A method performed by a base station, the method comprising:

transmitting (A1305) configuration information for a paging early indication (PEI) through higher layer signaling;
transmitting (A1310) first physical downlink control channel, PDCCH, carrying downlink control information, DCI, having a format for the PEI to a user equipment, UE, in a radio resource control, RRC, idle or RRC inactive state, based on the configuration information for the PEI; and
transmitting (A1315) a second PDCCH for paging in a paging occasion, PO, associated with the PEI based on the DCI having the format for the PEI,
**characterized in that** the configuration information for the PEI includes information regarding a DCI payload size 'N' of the format for the PEI,
wherein the DCI having the format for the PEI includes first information bits related to the paging and second information bits related to tracking reference signal, TRS, availability in the RRC idle or RRC inactive state,
wherein a size 'M' of total information bits of the DCI having the format for the PEI is equal to or less than the DCI payload size 'N', and
wherein based on the size 'M' of the total information bits and the DCI payload size 'N' remaining 'N' - 'M' bits are configured as reserved bits in the DCI having the format for the PEI.

**15.** A base station (200) comprising:

at least one transceiver (206);
at least one processor (202); and
at least one memory (204) configured to store instructions that, when executed by the at least one processor (202), causes the base station (200) to perform operations, the operations comprising:

transmitting (A1305) configuration information for a paging early indication, PEI, through higher layer signaling;
transmitting (A1310) a first physical downlink control channel, PDCCH, carrying downlink control information, DCI, having a format for the PEI to a user equipment, UE, in a radio resource control, RRC, idle or RRC inactive state, based on the configuration information for the PEI; and
transmitting (A1315) a second PDCCH for paging in a paging occasion, PO, associated with the PEI based on the DCI having the format for the PEI,

**characterized in that** the configuration information for the PEI includes information regarding a DCI payload size 'N' of the format for the PEI,

wherein the DCI having the format for the PEI includes first information bits related to the paging and second information bits related to tracking reference signal, TRS, availability in the RRC idle or RRC inactive state,

wherein a size 'M' of total information bits of the DCI having the format for the PEI is equal to or less than the DCI payload size 'N', and

wherein based on the size 'M' of the total information bits and the DCI payload size 'N' remaining 'N' - 'M' bits are configured as reserved bits in the DCI having the format for the PEI.

**Patentansprüche**

1. Verfahren, das von einer Benutzerausrüstung, UE, durchgeführt wird, umfassend:

   Empfangen (A1205) von Konfigurationsinformationen für eine Paging-Frühanzeige, PEI, durch Signalisierung höherer Schichten;
   Überwachen (A1210) eines ersten physischen Downlink-Steuerkanals, PDCCH, der Downlink-Steuerinformationen, DCI, trägt, die ein Format für die PEI aufweisen, in einem Funkressourcensteuerungs, RRC,-Ruhe- oder inaktiven RRC-Zustand basierend auf den Konfigurationsinformationen für die PEI; und
   Überwachen (A1215) eines zweiten PDCCH für Paging in einem Paging-Ereignis, PO, das der PEI zugeordnet ist, basierend auf der Erkennung der DCI, die das Format für die PEI aufweisen,
   **dadurch gekennzeichnet, dass** die Konfigurationsinformationen für die PEI Informationen über die DCI-Nutzlastgröße 'N' in dem Format für die PEI enthalten, wobei die DCI, die das Format für die PEI aufweisen, erste Informationsbits in Bezug auf das Paging und zweite Informationsbits in Bezug auf die Tracking-Referenzsignal, TRS,-Verfügbarkeit in dem RRC-Ruhe- oder inaktiven RRC-Zustand aufweisen,
   wobei eine Größe "M" der Gesamtinformationsbits der DCI, die das Format für die PEI aufweisen, gleich oder kleiner als die DCI-Nutzlastgröße "N" ist, und
   wobei basierend auf der Größe "M" der Gesamtinformationsbits und der DCI-Nutzlastgröße "N" die verbleibenden "N" - "M" Bits reservierte Bits sind.

2. Verfahren nach Anspruch 1, wobei die Größe 'N' - 'M' der reservierten Bits eine Variable ist, die auf der Größe 'M' der gesamten Informationsbits basiert, die von der UE bestimmt werden, sowie auf der DCI-Nutzlastgröße 'N', die durch die Signalisierung höherer Schichten an die UE konfiguriert wird.

3. Verfahren nach Anspruch 1, wobei eine zyklische Redundanzprüfung, CRC, des ersten PDCCH mit einer Paging-Frühanzeige-temporäre Kennung des Funknetzes, PEI-RNTI, verschlüsselt wird.

4. Verfahren nach Anspruch 3, wobei die UE den ersten PDCCH in einem gemeinsamen Suchraum, CSS, überwacht, der auf der PEI-RNTI basiert.

5. Verfahren nach Anspruch 1, wobei die DCI, die das Format für den PEI aufweisen, für ein oder zwei oder mehrere UEs, einschließlich des UEs, gemeinsam ist.

6. Verfahren nach Anspruch 1, wobei das Überwachen des ersten PDCCH, der die DCI trägt, die das Format für die PEI aufweisen, nur in dem RRC-Ruhe- oder inaktiven RRC-Zustand durchgeführt wird.

7. Verfahren nach Anspruch 6, wobei die UE das Überwachen des ersten PDCCH, der die DCI trägt, die das Format für die PEI aufweisen, in einem RRC-verbundenen Zustand beendet.

8. Verfahren nach Anspruch 1, wobei die Signalisierung höherer Schichten sich auf einen Systeminformationsblock, SIB, bezieht.

9. Verfahren nach Anspruch 1, wobei die Konfigurationsinformationen für die PEI Informationen über die Größe der ersten Informationsbits sowie Informationen über die Größe der zweiten Informationsbits enthalten.

10. Computerlesbares Medium, auf dem ein Programm gespeichert ist, das, wenn es von einem Prozessor einer Benutzerausrüstung, UE, ausgeführt wird, die UE dazu veranlasst, das Verfahren gemäß einem der vorhergehenden Ansprüche durchzuführen.

11. Vorrichtung (100), die Folgendes umfasst:

mindestens einen Prozessor (102); und
mindestens einen Speicher (104), der so konfiguriert ist, dass er Anweisungen speichert, die, wenn sie von dem mindestens einen Prozessor (102) ausgeführt werden, die Vorrichtung (100) dazu veranlassen, Operationen durchzuführen, wobei die Operationen Folgendes umfassen:

Empfangen (A1205) von Konfigurationsinformationen für eine Paging-Frühanzeige, PEI, durch Signalisierung höherer Schichten;
Überwachen (A1210) eines ersten physischen Downlink-Steuerkanals, PDCCH, der Downlink-Steuerinformationen, DCI, trägt, die ein Format für die PEI aufweisen, in einem Funkressourcensteuerungs, RRC,-Ruhe- oder inaktiven RRC-Zustand basierend auf den Konfigurationsinformationen für die PEI; und
Überwachen (A1215) eines zweiten PDCCH für Paging in einem Paging-Ereignis, PO, das der PEI zugeordnet ist, basierend auf der Erkennung der DCI, die das Format für die PEI aufweisen,
**dadurch gekennzeichnet, dass** die Konfigurationsinformationen für die PEI Informationen über die DCI-Nutzlastgröße 'N' in dem Format für die PEI enthalten, wobei die DCI, die das Format für die PEI aufweisen, erste Informationsbits in Bezug auf das Paging und zweite Informationsbits in Bezug auf die Tracking-Referenzsignal, TRS,-Verfügbarkeit in dem RRC-Ruhe- oder inaktiven RRC-Zustand aufweisen,
wobei eine Größe "M" der Gesamtinformationsbits der DCI, die das Format für die PEI aufweisen, gleich oder kleiner als die DCI-Nutzlastgröße "N" ist, und
wobei basierend auf der Größe "M" der Gesamtinformationsbits und der DCI-Nutzlastgröße "N" die verbleibenden "N" - "M" Bits reservierte Bits sind.

12. Vorrichtung (100) nach Anspruch 11, die ferner Folgendes umfasst:
mindestens einen Transceiver (106), der so konfiguriert ist, dass er Funksignale unter der Steuerung des mindestens einen Prozessors (102) überträgt oder empfängt.

13. Vorrichtung (100) nach Anspruch 11, wobei die Vorrichtung (100) eine Benutzerausrüstung, UE, ist, die für den Betrieb in einem drahtlosen Kommunikationssystem konfiguriert ist.

14. Verfahren, das von einer Basisstation durchgeführt wird, wobei das Verfahren Folgendes umfasst:

Übertragen (A1305) von Konfigurationsinformationen für eine Paging-Frühanzeige (PEI) durch Signalisierung höherer Schichten;
Übertragen (A1310) des ersten physischen Downlink-Steuerkanals, PDCCH, der Downlink-Steuerinformationen, DCI, die ein Format für die PEI aufweisen, an eine Benutzerausrüstung, UE, in einem Funkressourcensteuerungs, RRC,-Ruhe- oder in dem inaktiven RRC-Zustand basierend auf den Konfigurationsinformationen für die PEI; und
Übertragen (A1315) eines zweiten PDCCH für Paging in einem Paging-Ereignis, PO, das der PEI zugeordnet ist, basierend auf den DCI, das das Format für die PEI aufweisen,
**dadurch gekennzeichnet, dass** die Konfigurationsinformationen für die PEI Informationen über die DCI-Nutzlastgröße 'N' in dem Format für die PEI enthalten, wobei die DCI, die das Format für die PEI aufweisen, erste Informationsbits in Bezug auf das Paging und zweite Informationsbits in Bezug auf die Tracking-Referenzsignal, TRS,-Verfügbarkeit in dem RRC-Ruhe- oder inaktiven RRC-Zustand aufweisen,
wobei eine Größe "M" der Gesamtinformationsbits der DCI, die das Format für die PEI aufweisen, gleich oder kleiner als die DCI-Nutzlastgröße "N" ist, und
wobei basierend auf der Größe 'M' der Gesamtinformationsbits und der DCI-Nutzlastgröße 'N' die verbleibenden 'N' - 'M' Bits als reservierte Bits in den DCI, die das Format für die PEI aufweisen, konfiguriert sind.

15. Basisstation (200), die ferner Folgendes umfasst:

mindestens einen Transceiver (206);
mindestens einen Prozessor (202); und
mindestens einen Speicher (204), der so konfiguriert ist, dass er Anweisungen speichert, die, wenn sie von dem mindestens einen Prozessor (202) ausgeführt werden, die Basisstation (200) dazu veranlassen, Operationen durchzuführen, wobei die Operationen Folgendes umfassen:

Übertragen (A1305) von Konfigurationsinformationen für eine Paging-Frühanzeige, PEI, durch Signalisierung höherer Schichten;

Übertragen (A1310) eines ersten physischen Downlink-Steuerkanals, PDCCH, der Downlink-Steuerinformationen, DCI, trägt, die ein Format für die PEI aufweisen, an eine Benutzerausrüstung, UE, in einem Funkressourcensteuerungs, RRC,-Ruhe- oder in dem inaktiven RRC-Zustand basierend auf den Konfigurationsinformationen für die PEI; und

Übertragen (A1315) eines zweiten PDCCH für Paging in einem Paging-Ereignis, PO, das der PEI zugeordnet ist, basierend auf den DCI, das das Format für die PEI aufweisen,

**dadurch gekennzeichnet, dass** die Konfigurationsinformationen für die PEI Informationen über die DCI-Nutzlastgröße 'N' in dem Format für die PEI enthalten, wobei die DCI, die das Format für die PEI aufweisen, erste Informationsbits in Bezug auf das Paging und zweite Informationsbits in Bezug auf die Tracking-Referenzsignal, TRS,-Verfügbarkeit in dem RRC-Ruhe- oder inaktiven RRC-Zustand aufweisen,

wobei eine Größe "M" der Gesamtinformationsbits der DCI, die das Format für die PEI aufweisen, gleich oder kleiner als die DCI-Nutzlastgröße "N" ist, und

wobei basierend auf der Größe 'M' der Gesamtinformationsbits und der DCI-Nutzlastgröße 'N' die verbleibenden 'N' - 'M' Bits als reservierte Bits in den DCI, die das Format für die PEI aufweisen, konfiguriert sind.

## Revendications

1. Procédé réalisé par un équipement utilisateur, UE, le procédé comprenant :

   la réception (A1205) d'informations de configuration pour une indication précoce de radiomessagerie, PEI, par le biais d'une signalisation de couche supérieure ;

   la surveillance (A1210) d'un premier canal physique de contrôle de liaison descendante, PDCCH, transportant des informations de contrôle de liaison descendante, DCI, ayant un format pour la PEI dans un état de contrôle de ressource radio, RRC, au repos ou RRC inactif, sur la base des informations de configuration pour la PEI ; et

   la surveillance (A1215) d'un deuxième PDCCH pour la radiomessagerie lors d'une occasion de radiomessagerie, PO, associée à la PEI sur la base de la détection des DCI ayant le format pour la PEI,

   **caractérisé en ce que** les informations de configuration pour la PEI incluent des informations concernant une taille de charge utile de DCI « N » du format pour la PEI, dans lequel les DCI ayant le format pour la PEI incluent des premiers bits d'information liés à la radiomessagerie et des deuxièmes bits d'information liés à la disponibilité de signal de référence de suivi, TRS, dans l'état RRC au repos ou RRC inactif,

   dans lequel une taille « M » de bits d'information totaux des DCI ayant le format pour la PEI est égale ou inférieure à la taille de charge utile de DCI « N », et

   dans lequel, sur la base de la taille « M » des bits d'information totaux et de la taille de charge utile de DCI « N », les bits restants « N » - « M » sont des bits réservés.

2. Procédé selon la revendication 1, dans lequel une taille « N » - « M » des bits réservés est une variable déterminée sur la base de la taille « M » des bits d'information totaux déterminés par l'UE, et de la taille de charge utile de DCI « N » configurée pour l'UE par le biais de la signalisation de couche supérieure.

3. Procédé selon la revendication 1, dans lequel une vérification de redondance cyclique, CRC, du premier PDCCH est brouillée avec un identifiant temporaire de réseau radio d'indication précoce de radiomessagerie, PEI-RNTI.

4. Procédé selon la revendication 3, dans lequel l'UE surveille le premier PDCCH dans un espace de recherche commun, CSS, défini sur la base du PEI-RNTI.

5. Procédé selon la revendication 1, dans lequel les DCI ayant le format pour la PEI sont communes à un UE, à deux UE ou à plus, y compris l'UE.

6. Procédé selon la revendication 1, dans lequel la surveillance du premier PDCCH transportant les DCI ayant le format pour la PEI est réalisée uniquement dans l'état RRC au repos ou RRC inactif.

7. Procédé selon la revendication 6, dans lequel l'UE cesse de surveiller le premier PDCCH transportant les DCI ayant le format pour la PEI dans un état RRC connecté.

8. Procédé selon la revendication 1, dans lequel la signalisation de couche supérieure est liée à un bloc d'information système, SIB.

9. Procédé selon la revendication 1, dans lequel les informations de configuration pour la PEI incluent des informations concernant une taille des premiers bits d'information et des informations concernant une taille des deuxièmes bits d'information.

10. Support lisible par ordinateur sur lequel est enregistré un programme qui, lorsqu'il est exécuté par un processeur d'un équipement utilisateur, UE, amène l'UE à réaliser le procédé selon l'une quelconque des revendications précédentes.

11. Dispositif (100) comprenant :

au moins un processeur (102) ; et
au moins une mémoire (104) configurée pour stocker des instructions qui, lorsqu'elles sont exécutées par l'au moins un processeur (102), amènent le dispositif (100) à réaliser des opérations, les opérations comprenant :

la réception (A1205) d'informations de configuration pour une indication précoce de radiomessagerie, PEI, par le biais d'une signalisation de couche supérieure ;
la surveillance (A1210) d'un premier canal physique de contrôle de liaison descendante, PDCCH, transportant des informations de contrôle de liaison descendante, DCI, ayant un format pour la PEI dans un état de contrôle de ressource radio, RRC, au repos ou RRC inactif, sur la base des informations de configuration pour la PEI ; et
la surveillance (A1215) d'un deuxième PDCCH pour la radiomessagerie lors d'une occasion de radiomessagerie, PO, associée à la PEI sur la base de la détection des DCI ayant le format pour la PEI, **caractérisé en ce que** les informations de configuration pour la PEI incluent des informations concernant une taille de charge utile de DCI « N » du format pour la PEI, dans lequel les DCI ayant le format pour la PEI incluent des premiers bits d'information liés à la radiomessagerie et des deuxièmes bits d'information liés à la disponibilité de signal de référence de suivi, TRS, dans l'état RRC au repos ou RRC inactif, dans lequel une taille « M » de bits d'information totaux des DCI ayant le format pour la PEI est égale ou inférieure à la taille de charge utile de DCI « N », et
dans lequel, sur la base de la taille « M » des bits d'information totaux et de la taille de charge utile de DCI « N », les bits restants « N » - « M » sont des bits réservés.

12. Dispositif (100) selon la revendication 11, comprenant en outre :
au moins un émetteur-récepteur (106) configuré pour émettre ou recevoir des signaux radio sous le contrôle de l'au moins un processeur (102).

13. Dispositif (100) selon la revendication 11, dans lequel le dispositif (100) est un équipement utilisateur, UE, configuré pour fonctionner dans un système de communication sans fil.

14. Procédé réalisé par une station de base, le procédé comprenant :

l'émission (A1305) d'informations de configuration pour une indication précoce de radiomessagerie (PEI) par le biais d'une signalisation de couche supérieure ;
l'émission (A1310) d'un premier canal physique de contrôle de liaison descendante, PDCCH, transportant des informations de contrôle de liaison descendante, DCI, ayant un format pour la PEI vers un équipement utilisateur, UE, dans un état de contrôle de ressource radio, RRC, au repos ou RRC inactif, sur la base des informations de configuration pour la PEI ; et
l'émission (A1315) d'un deuxième PDCCH pour la radiomessagerie lors d'une occasion de radiomessagerie, PO, associée à la PEI sur la base des DCI ayant le format pour la PEI, **caractérisé en ce que** les informations de configuration pour la PEI incluent des informations concernant une taille de charge utile de DCI « N » du format pour la PEI, dans lequel les DCI ayant le format pour la PEI incluent des premiers bits d'information liés à la radiomessagerie et des deuxièmes bits d'information liés à la disponibilité de signal de référence de suivi, TRS, dans l'état RRC au repos ou RRC inactif, dans lequel une taille « M » de bits d'information totaux des DCI ayant le format pour la PEI est égale ou inférieure à la taille de charge utile de DCI « N », et
dans lequel, sur la base de la taille « M » des bits d'information totaux et de la taille de charge utile de DCI « N », les bits restants « N » - « M » sont configurés comme des bits réservés dans les DCI ayant le format pour la PEI.

**15.** Station de base (200) comprenant :

au moins un émetteur-récepteur (206) ;
au moins un processeur (202) ; et
au moins une mémoire (204) configurée pour stocker des instructions qui, lorsqu'elles sont exécutées par l'au moins un processeur (202), amènent la station de base (200) à réaliser des opérations, les opérations comprenant :

l'émission (A1305) d'informations de configuration pour une indication précoce de radiomessagerie (PEI) par le biais d'une signalisation de couche supérieure ;
l'émission (A1310) d'un premier canal physique de contrôle de liaison descendante, PDCCH, transportant des informations de contrôle de liaison descendante, DCI, ayant un format pour la PEI vers un équipement utilisateur, UE, dans un état de contrôle de ressource radio, RRC, au repos ou RRC inactif sur la base des informations de configuration pour la PEI ; et
l'émission (A1315) d'un deuxième PDCCH pour la radiomessagerie lors d'une occasion de radiomessagerie, PO, associée à la PEI sur la base des DCI ayant le format pour la PEI,
**caractérisé en ce que** les informations de configuration pour la PEI incluent des informations concernant une taille de charge utile de DCI « N » du format pour la PEI, dans laquelle les DCI ayant le format pour la PEI incluent des premiers bits d'information liés à la radiomessagerie et des deuxièmes bits d'information liés à la disponibilité de signal de référence de suivi, TRS, dans l'état RRC au repos ou RRC inactif,
dans laquelle une taille « M » de bits d'information totaux des DCI ayant le format pour la PEI est égale ou inférieure à la taille de charge utile de DCI « N », et
dans laquelle, sur la base de la taille « M » des bits d'information totaux et de la taille de charge utile de DCI « N », les bits restants « N » - « M » sont configurés comme des bits réservés dans les DCI ayant le format pour la PEI.

# FIG. 1

| Initial Cell Search | System Information Reception | Random Access Procedure | General DL/UL Tx/Rx S18 |

PSS/SSS & [DLRS] & PBCH — S11

PDCCH/ PDSCH (BCCH) — S12

PRACH — S13    PDCCH/ PDSCH — S14    PRACH — S15    PDCCH/ PDSCH — S16

PDCCH/ PDSCH — S17    PUSCH/ PUCCH

• DL/UL ACK/NACK
• UE CQI/PMI/Rank Report using PUSCH and PUCCH

# FIG. 2

One Frame (10ms)

Half-Frame (5ms)    Half-Frame (5ms)

Subframe 0 (1ms)    Subframe 4 (1ms)    Subframe 5 (1ms)    Subframe 9 (1ms)

Subframe (1ms)

15KHz    Slot (14 symbols)
1ms

30KHz    Slot 0 (14 symbols)    Slot 1
500us

60KHz    Slot 0 (14 symbols)    Slot 1    Slot 2    Slot 3
250us

120KHz    Slot 0 (14 symbols)    Slot 1    Slot 2    Slot 3    Slot 4    Slot 5    Slot 6    Slot 7
125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

Long PUSCH

PDCCH

Gap

Short PUCCH

PDSCH/PUSCH

Long PUSCH

One slot

f

t

# FIG. 5

| UE | BS |

CORESET configuration    S502

SS configuration    S504

PDCCH generation    S506

PDCCH candidate monitoring in the configured SS    S508

# FIG. 6

DL assingment-to-PDSCH offset (K0)

PDCCH

slot

PDSCH

PUCCH

PDSCH-to-HARQ-ACK reporting offset (K1)

# FIG. 7

UL grant-to-PUSCH offset (K2)

PDCCH

PUSCH

# FIG. 8

WUS duration

WUS

PO

Configured maximum
WUS duration

Gap

power

time

# FIG. 9

Transmit Configuration Information for PEI — FC101

Transmit PEI — FC102

Transmit Paging PDCCH/PDSCH — FC103

# FIG. 10

Receive Configuration Information for PEI — FC201

Receive PEI — FC202

Receive Paging PDCCH/PDSCH — FC203

**FIG. 11**

# FIG. 12

Receive Configuration Information for PEI — A1205

Monitor 1st PDCCH for PEI
based on Configuration Information for PEI — A1210

Monitor 2nd PDCCH for paging — A1215

## FIG. 13

A1305

Transmit Configuration Information for PEI

A1310

Transmit 1st PDCCH for PEI
based on Configuration Information for PEI

A1315

Transmit 2nd PDCCH for paging

# FIG. 14

# FIG. 15

# FIG. 16

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 17

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108    208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

# FIG. 18